# EUROPEAN PATENT SPECIFICATION

(11) **EP 4 128 722 B1**
(45) Date of publication and mention of the grant of the patent: **14.02.2024**
(21) Application number: 21720142.5
(22) Date of filing: 30.03.2021
(51) Int. Cl.: H04L 9/40, H04L 67/12, G07C 5/00, G07C 9/00, H04L 67/563, H04W 4/40

(54) **CLOUD-BASED REAL-TIME VEHICLE DATA SHARING**
CLOUD-BASIERTES ECHTZEITSYSTEM ZUR GEMEINSAMEN NUTZUNG VON FAHRZEUGDATEN
SYSTÈME EN NUAGE ET EN TEMPS RÉEL POUR PARTAGER DES DONNÉES DE VÉHICULE

(30) Priority: 01.04.2020 US 202063003823 P; 15.06.2020 US 202063039406 P; 25.03.2021 US 202117213195
(43) Date of publication of application: 08.02.2023
(73) Proprietor: Autonomic, LLC, Palo Alto, CA 94304 (US)
(72) Inventor: PETRI, Robert J., Palo Alto, CA 94304 (US); LIMES, Gregory Lorin, Palo Alto, CA 94304 (US); BLACK, Benjamin, Palo Alto, CA 94304 (US); CULLEN, Sean James, Palo Alto, CA 94304 (US); SPEHLMANN, Marc A., Palo Alto, CA 94304 (US); KASPRZOK, Andreas M., Palo Alto, CA 94304 (US); BRYSON, David W., Palo Alto, CA 94304 (US); TIMMA, Jagannath, Palo Alto, CA 94304 (US); MATHUR, Gaurav, Palo Alto, CA 94304 (US); HALLMAN, Richard G., Palo Alto, CA 94304 (US); GARCIA ALVARADO, Carlos, Palo Alto, CA 94304 (US); HUM, Jason Paul, Palo Alto, CA 94304 (US)
(74) Representative: Harrison IP Limited
(86) International application number: PCT/US2021/024987
(87) International publication number: WO 2021/202601

(56) References cited:
- WO-A2-2008/103756
- US-A1- 2019 147 152
- US-A1- 2020 053 091

## Description

### TECHNICAL FIELD

This application relates generally to vehicle data collection and distribution including, but not limited to, computer-aided methods and systems for collecting data from a large number of vehicles and distributing the collected data to a plurality of data clients that analyze the collected data and initiate customized vehicle services or operations (e.g., concierge service, diagnostics and maintenance, driver behavior analysis, vehicle performance monitoring, fleet management, geo-fencing, emergency road service, smart city management, stolen vehicle tracking, and insurance service).

### BACKGROUND

Vehicles are equipped with electronics allowing them to collect data and exchange the data in real time with connected or remote computer device(s). Typically, each vehicle collects data using existing sensors and/or cameras built into the vehicle and submits the data to its respective automaker over a wireless network, such as a cellular phone network. This allows automakers to remotely assist their customers unlock their cars remotely, upgrade safety features and/or in-vehicle software, and adjust maintenance schedules based on vehicle performance. Some automakers also provide software applications to individual customers to facilitate vehicle data sharing with regard to their own cars. However, vehicle data is primarily collected by individual automakers and shared with customers, other automakers, or some vehicle service businesses on a case-by-case basis. It would be beneficial to have a more efficient vehicle data collection and distribution mechanism than the current practice

WO2008103756 discloses methods and systems for vehicle fleet management, wherein different users may have different levels of access to vehicle-related data, depending on their respective authorizations within a company.

The claimed invention relates to a method, a computer-readable medium carrying instructions and a server as defined in independent claims 1, 14 and 15, respectively. Preferred embodiments are defined in the dependent claims.

### BRIEF DESCRIPTION OF THE DRAWINGS

For a better understanding of the various described embodiments, reference should be made to the Description of Embodiments below, in conjunction with the following drawings in which like reference numerals refer to corresponding parts throughout the figures.
Figure 1A is an exemplary network operating environment that includes vehicles, a server system and client devices interacting with each other to collect and distribute vehicle data via one or more communication networks in accordance with some embodiments.
Figure 1B is another exemplary network operating environment 150 that includes vehicles, vehicle operator devices, a server system, and client devices interacting with each other to collect and distribute vehicle control data via one or more communication networks in accordance with some embodiments.
Figures 2A and 2B are a flow diagram illustrating data communication among vehicles, a server system, a client device and a vehicle operator device in accordance with some embodiments.
Figure 2C is a flow diagram illustrating data communication among vehicles, a server system, a client device and a vehicle operator device in accordance with some embodiments.
Figure 3 is a diagram of a plurality of vehicle data shards into which a plurality of real-time vehicle data flows is organized in accordance with some embodiments.
Figure 4 is an exemplary vehicle data shard that organizes data items sequentially according to a temporal order in accordance with some embodiments.
Figure 5 is a flow diagram of an exemplary vehicle data communication process that is controlled by an access level associated with a user credential in accordance with some embodiments.
Figure 6A is a block diagram of an example vehicle data feed server that is configured to manage a vehicle data communication process in accordance with some embodiments, and Figure 6B is a block diagram of a coordinator module of the vehicle data feed server that is configured to manage an access level associated with a vehicle data request during the course of communicating vehicle data in accordance with some embodiments.
Figure 7 is a flow diagram of another exemplary vehicle data communication process that is based on vehicle data shards in accordance with some embodiments.
Figure 8A is a flow diagram of an example method of communicating vehicle data via a vehicle data feed server in accordance with some embodiments.
Figure 8B is a flow diagram of another example method of communicating vehicle data via a vehicle data feed server in accordance with some embodiments.
Figure 9 is an exemplary server system configured to enable vehicle data sharing in accordance with some embodiments.
Figure 10 is an exemplary client device configured to execute a vehicle data application that enables requesting and reviewing vehicle data in accordance with some embodiments.

Like reference numerals refer to corresponding parts throughout the several views of the drawings.

### DESCRIPTION OF EMBODIMENTS

In various embodiments of this application, a vehicle data feed service platform is established to provide a business-to-business web service to multiple client groups. This vehicle data feed service platform collects real-time vehicle data flows (e.g., including telemetry data and control commands) from a large number of network-connected vehicles, and provides the collected vehicle data flows to one or more user accounts of the client groups hosted. A vehicle data application is implemented at client devices that are associated with the user accounts of the client groups, allowing users of the client devices to request vehicle data via corresponding user accounts. Each user account is associated with an access level, and the vehicle data feed service platform has conditioned the collected vehicle data flows according to the access levels of its corresponding user accounts. In response to a vehicle data request by a user, the vehicle data feed service platform identifies vehicle data in the conditioned vehicle data flows directly and provides the requested vehicle data to the client device via the vehicle data application.

The vehicle data application may be enabled by a feed consumer Application Programming Interface (API) and provides a graphical user interface (GUI) to present the requested vehicle data, based on an open source Remote Procedure Call (RPC) system, e.g., the GOOGLE RPC system. In some embodiments, the vehicle data feed service platform consolidates vehicle data flows provided by vehicles of two or more brands, and is managed by a third party independent of any automaker associated with the two or more brands. Alternatively, in some embodiments, the vehicle data feed service platform is established or managed by a third party delegated by automakers of the two or more brands. Further, in some embodiments, the vehicle data feed service platform is established or managed by an automaker to provide the vehicle data flows from the vehicles of two or more brands under a joint data agreement. As such, a large amount of generic vehicle data can be collected by the vehicle data feed service platform to facilitate a variety of vehicle-related applications without being limited by individual automakers.

Examples of the client groups to which the generic vehicle data is distributed include, but are not limited to, an automaker, a car rental company, a marketing agency, and a public service entity. Each client group optionally has one or more user accounts each having a respective access level. By way of the one or more user accounts, the client groups can implement the variety of vehicle-related applications involving individual vehicles or vehicle fleets based on the large amount of generic vehicle data collected from vehicles of different makes. For example, a concierge service is enabled to offer a user account with a number of personal services (e.g. mobile car detailing) based on real-time vehicle data concerning a location, fuel level, oil level, and control command of a vehicle associated with the user account. A diagnostics and maintenance service may be offered to optimize maintenance packages and predict when a vehicle part needs to be repaired or replaced and when a vehicle needs service based on vehicle health indicators and diagnostic trouble codes. Other vehicle-related applications of the vehicle data include, but are not limited to, driver behavior analysis, vehicle performance monitoring, fleet management, geo-fencing, emergency road service, smart city management, stolen vehicle tracking, and insurance service.

Reference will now be made in detail to embodiments, examples of which are illustrated in the accompanying drawings. In the following detailed description, numerous specific details are set forth in order to provide a thorough understanding of the various described embodiments. However, it will be apparent to one of ordinary skill in the art that the various described embodiments may be practiced without these specific details. In other instances, well-known methods, procedures, components, modules and networks have not been described in detail so as not to unnecessarily obscure aspects of the embodiments.

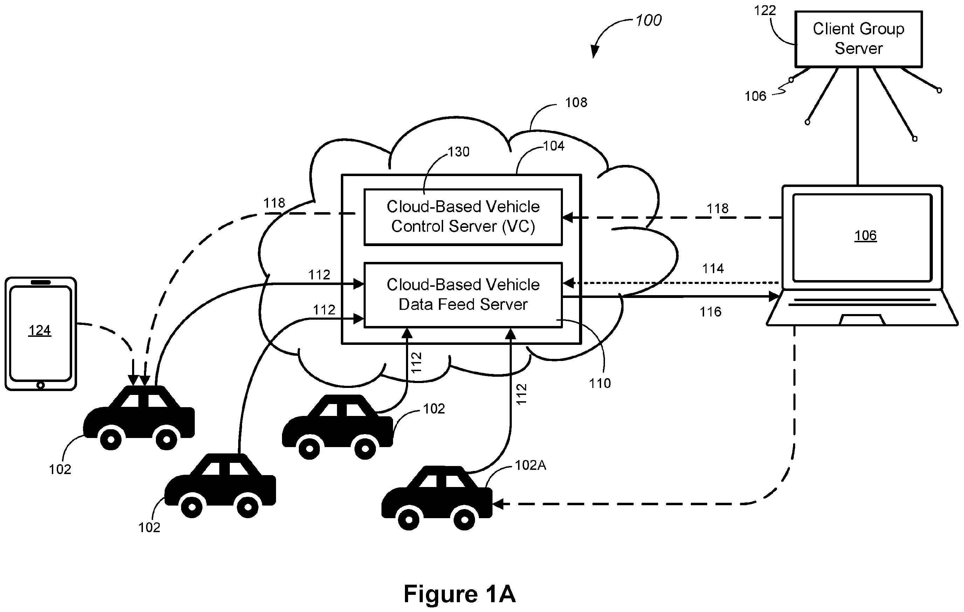

Figure 1A is an exemplary network operating environment 100 including vehicles 102, a server system 104, and one or more client devices 106 interacting with each other to collect and distribute vehicle data via one or more communication networks 108 in accordance with some embodiments. The operating environment 100 corresponds to a virtual user domain created and hosted by the server system 104, and includes a plurality of vehicle accounts, a plurality or user accounts or both. Each vehicle account optionally corresponds to a single vehicle 102 or a group of two or more vehicles 102 (e.g., grouped by a common owner, automaker or dealer). Each vehicle 102 is configured to stream a respective real-time vehicle data flow to the vehicle data feed server 110, which is configured to collect and consolidate the real-time vehicle data flows streamed from the plurality of vehicles 102. For each of the user accounts in the virtual user domain, a user 120 can log onto the respective user account on a client device 106 and request relevant vehicle data (i.e., a subset of the consolidated vehicle data flows) via a web browser or a dedicated vehicle data application. The web browser or dedicated vehicle data application of the client device 106 displays a graphical user interface (GUI) via which user requests are received and the requested vehicle data is presented to the user 120.

The plurality of vehicles 102 are remote from and communicatively coupled to the server system 104. The vehicles 102 include any moving object used for transporting people or goods. In some situations, the vehicles 102 broadly include wagons, bicycles, motor vehicles (e.g., motorcycles, cars, trucks, buses), railed vehicles (e.g., trains, trams), watercraft (e.g., ships, boats), amphibious vehicles (e.g., screw-propelled vehicle, hovercraft), aircraft (e.g., airplanes, helicopters), and spacecraft. In an example network operating environment 100, the vehicles 102 includes motor vehicles running on land, and each vehicle 102 is identifiable by a unique vehicle identification number (VIN). In some embodiments, each vehicle 102 includes a communication module, and communicates with another vehicle 102, a vehicle operator device 124, the client device 106 or the server system 104 using the one or more communication networks 108. The communication networks 108 used can be one or more networks having one or more type of topologies, including but not limited to the Internet, intranets, local area networks (LANs), cellular networks, Ethernet, telephone networks, Bluetooth personal area networks (PAN) and the like. In some embodiments, two or more of the vehicles 102 and client devices 106 in a sub-network are coupled via a local communication network (e.g., ZigBee, Z-Wave, Insteon, Bluetooth, Wi-Fi and other local communication networks).

In some embodiments, a vehicle 102 establishes a connection to the one or more communication networks 108 either directly (e.g., using 3G/4G/5G connectivity to a wireless carrier), or through a network interface (e.g., via a vehicle operator device 124, in the vehicle 102, which is wired to the vehicle 102 or wirelessly coupled to the vehicle 102 via a Bluetooth communication link). In an example, the vehicle operator device 124 is a mobile device that is located in the vehicle 102 and configured to create a hotspot for the vehicle 102. The hotspot is a blend of software, hardware and network data services that combine to transform the vehicle operator device 124 into the equivalent of a broadband modem and router to distribute a web connection to the vehicle 102 via Wi-Fi.

The one or more client devices 106 are physically remote from and communicatively coupled to the server system 104. In some embodiments, a client device 106 includes a desktop computer. In some embodiments, a client device 106 includes a mobile device, e.g., a mobile phone, a tablet computer and a laptop computer. Each client device 106 communicates with another client device 106, the vehicle 102 or the server system 104 using the one or more communication networks 108. In some embodiments, two or more client devices 106 in a sub-network are coupled via a wired connection, while at least some client devices 106 in the same sub-network are coupled via a local radio communication network (e.g., ZigBee, Z-Wave, Insteon, Bluetooth, Wi-Fi and other radio communication networks). In an example, a client device 106 establishes a connection to the one or more communication networks 108 either directly (e.g., using 3G/4G connectivity to a wireless carrier), or through a network interface 160 (e.g., a router, switch, gateway, hub, or an intelligent, dedicated whole-home control node), or through any combination thereof.

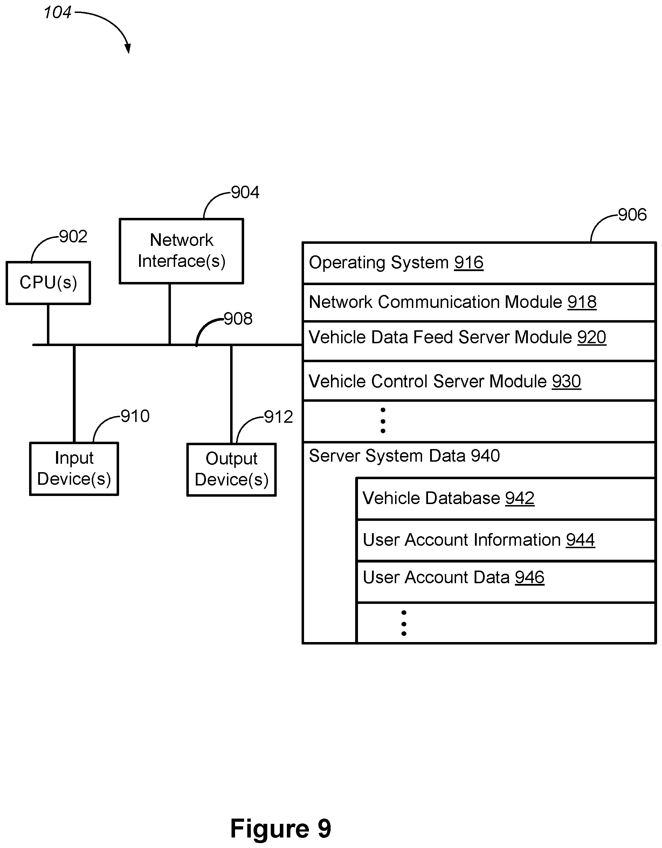

The server system 104 (also shown in Figure 9) includes one or more processors and memory storing instructions for execution by the one or more processors. The server system 104 is configured to receive a plurality of credentials and associated access levels to vehicle data, and store the plurality of credentials with the associated access levels in a database. The server system 104 is also configured to receive a plurality of real-time vehicle data flows 112 from the plurality of vehicles 102 via the one or more communication networks 108. Each real-time vehicle data flow 112 is associated with a respective vehicle 102 and includes at least vehicle telemetry data of the respective vehicle 102. The telemetry data includes at least data that is collected in real time from sensors within the respective vehicle 102. In some embodiments, the real-time vehicle data flows 112 are consolidated and grouped into a plurality of vehicle data shards that are optionally stored in a vehicle database of the server system 104. In some embodiments, while receiving the plurality of real-time vehicle data flows 112, the server system 104 also associates the plurality of real-time vehicle data flows with different user credentials according to access levels corresponding to these user credentials. For example, a user credential is associated with an access level for selecting vehicle data from the plurality of real-time vehicle data flows. The server system 104 identifies the vehicle data from the plurality of real-time vehicle data flows and associates the vehicle data with the user credential before receiving any request from a user associated with the user credential. In some embodiments, while receiving the real-time vehicle data flows, a hash function is established to define the associated access levels of the different credentials including the user credential, e.g., associate the user credential with information of the vehicle data (e.g., data flow identifications). Alternatively, in some embodiments, supplemental data items are associated with each of a subset of the plurality of vehicle data flows or shards according to the access level associated with the user credential, indicating that the respective real-time vehicle data flow is part of the vehicle data selected for the user credential.

In some implementations, for each user credential, the access level is used to select vehicles among the plurality of vehicles 102. Once selected, the entire vehicle data flow 112 of each selected vehicle 102 is associated with the user credential and will be provided to a user having the user credential upon request. For example, the access level defines that the user credential has an access to data for all red Ford pickups or all Nissan sedans having mileage readings greater than 50,000 miles. However, the access level does not treat two types of data items in a vehicle data flow 112 of each red Ford pickups differently, e.g., does not keep mileage data while sending gas pressure data in the respective vehicle data flow 112 to the user having the user credential. The user may apply an additional filter at the client device 106 after receiving the vehicle data flow 112.

When the server system 104 receives the user credential and a vehicle data request 114 from a user of a client device 106, the vehicle data request is not required to specify the access level associated with the user credential for selecting the vehicle data associated with the user credential. The server system 104 responds to the vehicle data request 114 by determining whether the user is authorized to access the vehicle data that is associated with the user credential and includes a subset of the plurality of real-time vehicle data flows; and in accordance with a determination that the user is authorized to access the vehicle data associated with the user credential, forwarding the subset of the plurality of real-time vehicle data flows to the client device. It is noted that the server system 104 responds to the vehicle data request 114 concurrently while receiving the plurality of real-time vehicle data flows 112 and that the data feed 116 reflects the vehicle data flows 112 in real time.

In some embodiments, the server system 104 includes a vehicle database (942 in Figure 9) to store the real-time vehicle data flows 112 or the vehicle data shards consolidated from the real-time vehicle data flows 112 in association with their respective vehicles 102 or vehicle accounts. The real-time vehicle data flows 112 or shards may be stored according to a pre-defined data storage rule. For example, in accordance with the pre-defined data storage rule, each of the vehicle data flows 112 or shards are stored for a respective predetermined duration of time (e.g., seven days). In another example, in accordance with the pre-defined data storage rule, a first vehicle data flow 112 or shard associated with a first vehicle has a priority over a second vehicle data flow 112 or shard associated with a second vehicle, and the second vehicle data flow 112 or shard is purged prior to the first vehicle data flow 112 or shard when a memory space allocated to the vehicle database is substantially full or reaches a threshold occupancy rate (e.g., %90).

Each client device 106 includes one or more processors and memory storing instructions for execution by the one or more processors. The instructions stored on the client device 106 enable implementation of the web browser and the vehicle data application. The web browser and the vehicle data application are linked to a user account in the virtual user domain of the operating environment 100. Specifically, the browser or vehicle data application enables a GUI to receive user credentials of the user account and user requests for vehicle data and present the vehicle data returned in the real-time data feed 116 to the user 120. In some embodiments, the user 120 intends to control one of the plurality of vehicles 102 after reviewing the real-time data feed 116 of the requested vehicle data. The client device 106 generates a vehicle control command 118 based on the vehicle data 116 and sends the vehicle control command 118 to the one of the plurality of vehicles 102, such that the one of the plurality of vehicles 102 can be controlled based on the vehicle data that is collected in real time from the plurality of vehicles 102. Further, in some embodiments, the real-time data feed 116 includes a subset of the vehicle data flows 116 that may or may not include a vehicle data flow corresponding to a first vehicle 102A. As the client device 106 generates a vehicle control command 118 based on the real-time data feed 116 for controlling the first vehicle 102A, the first vehicle 102A is controlled based on a history of vehicle data associated with one or more vehicles 102 that optionally includes or excludes the first vehicle 102A itself. In some embodiments, the client device 106 is configured to control the vehicles 102 via a cloud-based vehicle control server 130 of the server system 104.

In some embodiments, the operating environment 100 further includes a client group server 122 that is communicatively coupled to the plurality of client devices 106 to host a virtual user domain for one or more client groups. Examples of the client groups include, but are not limited to, an automaker, a car rental company, a marketing agency, and a public service entity. Each client group includes a plurality of user accounts having one or more access rights to the vehicle data provided by the server system 104. For example, a client group associated with a car rental company includes a plurality of user accounts having at least a super user account and a regular user account. The super user account has a first access level to the vehicle data associated with the car rental company, e.g., based on a contract agreement. The super user account has a priority to approve, define and adjust a second access level of the regular user account, while the second access level is equal to or lower than the first access level to the vehicle data. That said, in some situations, the super user account is allowed to define a respective access level for each of a subset or all of the regular user accounts associated with the client group. In some embodiments, the client group includes multiple user accounts of a first type (e.g., the super user account) and multiple user accounts of a second type (e.g., the regular user account). The user accounts of the same type optionally have the same access level or different access levels. Alternatively, in another example, a client group only has a single type of user accounts with the same access level, and all of its user accounts are associated with the same access levels. Further, in some embodiments, each user account of a client group is allowed to define a respective access level before sending out any vehicle data request. Optionally, a user account can only be accessed via a web browser or dedicated vehicle data application of a respective subset of predetermined client devices 106. Optionally, a user account can be accessed via any of the plurality of client devices 106, as far as the server system 104 can verify user credentials provided on the corresponding client device 106. The server system 104 is configured to receive credentials and associated access levels to vehicle data for these user accounts, and store the credentials with the associated access levels in its database.

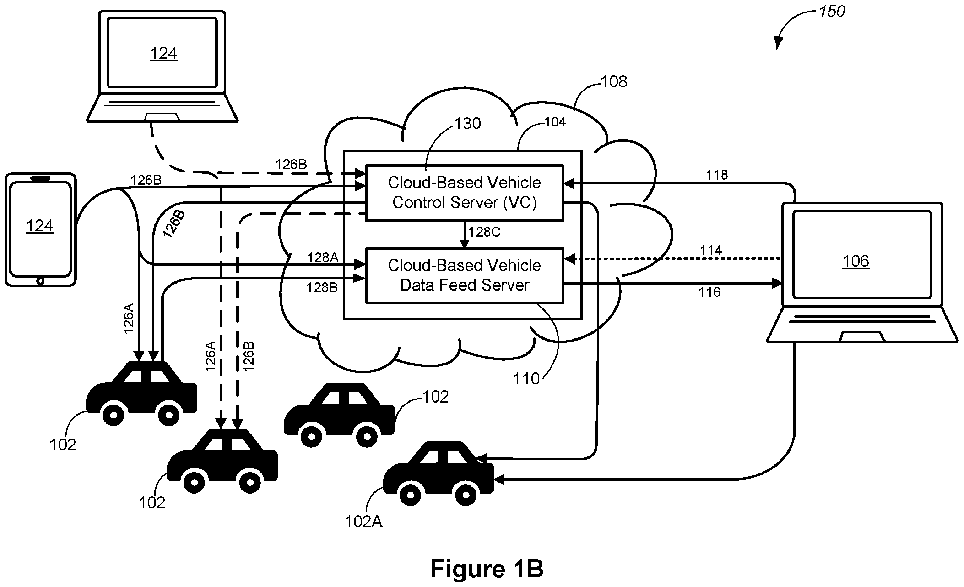

Figure 1B is another exemplary network operating environment 150 including vehicles 102, vehicle operator devices 124, a server system 104, and client devices 106 interacting with each other to collect and distribute vehicle control data 126 via one or more communication networks 108 in accordance with some embodiments. The server system 104 includes a cloud-based vehicle control server 130 configured to select one or more vehicles 102 and control the selected vehicles 102 in response to control commands received from an authorized operator (e.g., an automaker, a driver). For example, as explained above, the vehicle control server 130 can receive, from the client device 106, a vehicle control command 118 generated based on the vehicle data 116 and send the vehicle control command 118 to control a selected one of the plurality of vehicles 102. The client device 106 is optionally associated with a car rental company who issues the vehicle control command 118 to control one or more vehicles 102 in its fleet based on the vehicle data collected by the cloud-based vehicle data feed server 110 in the server system 104.

In some embodiments, the vehicles 102 are communicatively coupled to the one or more vehicle operator devices 124 via the one or more communication networks 108, and receive one or more control data flows 126 associated with the one or more vehicle operator devices 124. Each control data flow 126 includes one or more control commands, and each command is issued by a respective vehicle operator device 124 to control a respective subset of the plurality of vehicles 102. For example, an operator controls a vehicle 102 via a vehicle operator device 124, e.g., by issuing a control data flow 126 including at least a first control command. In some situations, the vehicle operator device 124 is located in proximity to the vehicle 102, and directly sends the first control command of the control data flow 126A to the vehicle 102 via a wire or local communication link (e.g., via a Bluetooth link). Alternatively, in some situations, the vehicle operator device 124 is located remotely from the vehicle 102, and sends the first control command of the control data flow 126B to the vehicle 102 via the cloud-based vehicle control server 130.

In some implementations, the vehicle control server 130 hosts a virtual user domain including a plurality of operator accounts, and each account is associated with one or more vehicles 102. Each operator device 124 is configured to run a vehicle control application to control the vehicles 102 via the plurality of operator accounts. The vehicle control application displays a graphical user interface (GUI) on which one or more control commands of each control data flow 126 are entered and applied to control a respective vehicle 102 directly or indirectly via the vehicle control server 130.

In some embodiments, a vehicle operator device 124 sends a corresponding control data flow 128A including information of the one or more control commands to the vehicle data feed server 110, while the corresponding control data flow 126A or 126B is sent to the vehicle 102 or the vehicle control server 130. Alternatively, in some embodiments, the vehicle operator device 124 does not report the corresponding control data flow 126 to the vehicle data feed server 110 directly. Instead, the vehicle data feed server 110 receives a control data flow 128B from each vehicle 102, after the respective vehicle 102 receives one or more control data flows 126 from one or more vehicle operator devices 124. Further, in some embodiments, the vehicle data feed server 110 receives a control data flow 128C from the vehicle control server 130 after the vehicle control server 130 collects the control data flow 126 from the vehicle operator device 124 or vehicle 102.

While the vehicle data feed server 110 receives the control data flows 128A-128C, it identifies part of vehicle data in the control data flows 128A-128C based on an access level associated with a user credential, and associates the part of vehicle data with the user credential. The user credential corresponds to the access level for accessing and selecting the vehicle data. In an example, a hash function is applied to associate the user credential with information of the vehicle data (e.g., data flow identifications). In another example, the vehicle data is optionally associated with a supplemental data item (e.g., a flag), indicating the vehicle data is accessible to the user credential based on the associated access level. Upon receiving a request from a client device 106 having the user credential, the vehicle data feed server 110 can promptly identify the vehicle data based on the hash function or the supplemental data item.

The one or more control data flows 128A-128C collected by the vehicle data feed server 110 are consolidated with the real-time vehicle data flows 112 at the vehicle data feed server 110. The real-time vehicle data flows 112 and control data flows 128 are optionally grouped into a plurality of vehicle data shards. As explained above, the vehicle data shards may be stored in a vehicle database of the server system 104. Both the real-time vehicle data flows 112 and control data flows 128 are stored in association with their respective vehicles 102 or vehicle accounts. The real-time vehicle data flows 112 or control data flows 128 may be stored according to a pre-defined data storage rule.

After collecting the vehicle data flows 112 and control data flows 128, the server system 104 responds to a vehicle data request 114 by determining whether a user is authorized to access vehicle data associated with the user credential of the user. The vehicle data includes a subset of the plurality of real-time vehicle data flows. In accordance with a determination that the user is authorized to access the vehicle data associated with the user credential, the server system 104 extracts the subset of the plurality of real-time vehicle data flows and transmits the extracted subset of the vehicle data flows to the requesting client device 106. Further, in some embodiments, the vehicle data associated with the user credential includes a subset of the control data flows 128 that may or may not include a control data flow corresponding to a first vehicle 102A. As the client device 106 generates a vehicle control command 118 based on the real-time data feed 116 for controlling the first vehicle 102A, the first vehicle 102A is controlled based on a history of control commands of one or more vehicles 102 that optionally includes or excludes the first vehicle 102A itself.

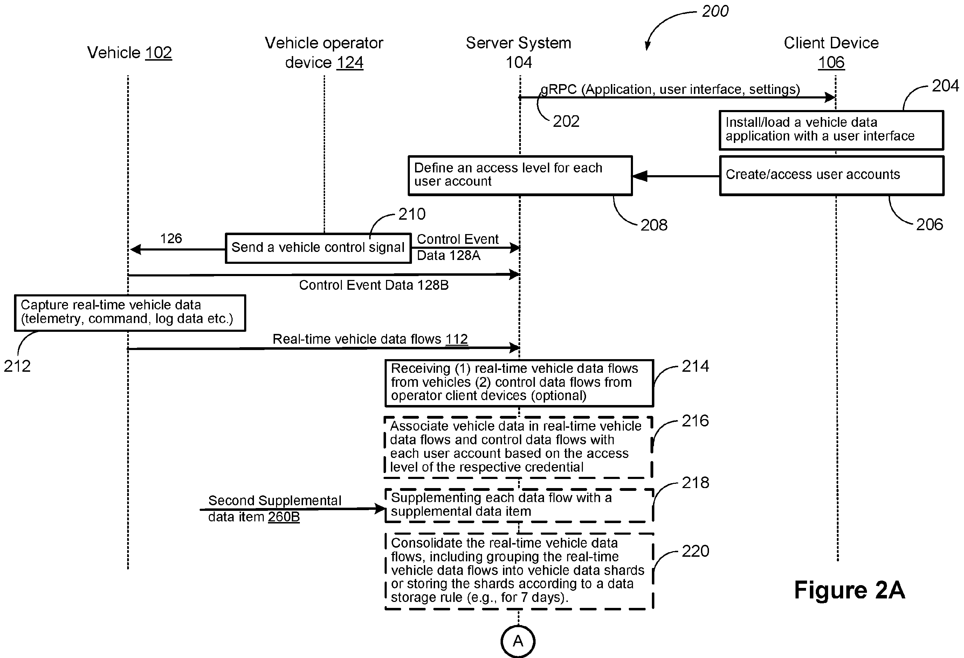

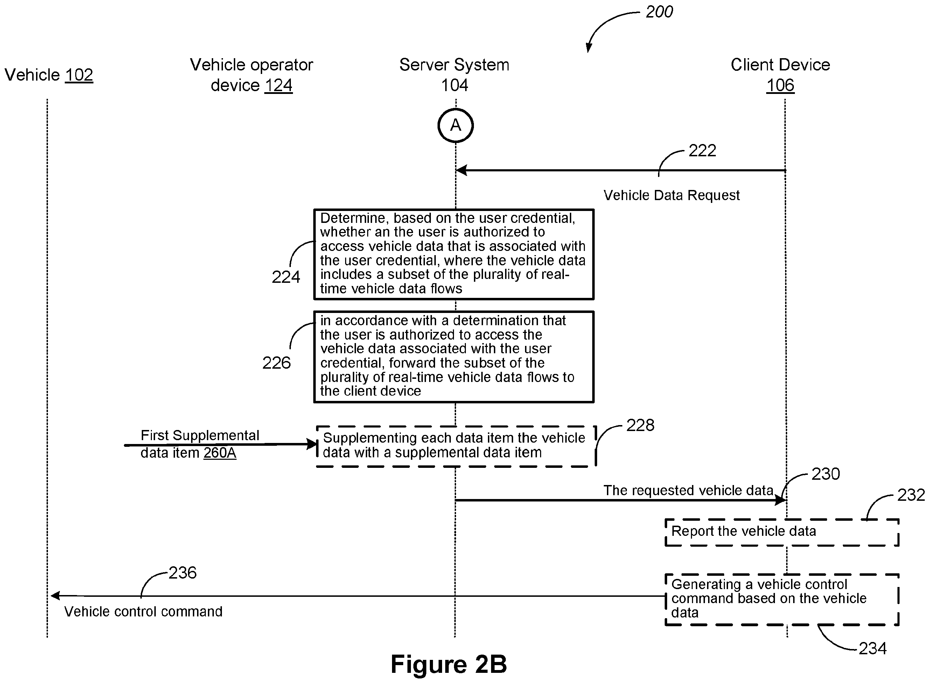

Figures 2A and 2B are a flow diagram illustrating data communication 200 among vehicles 102, a server system 104, a client device 106 and a vehicle operator device 124 in accordance with some embodiments. A vehicle data application is installed in the client device 106. In some embodiments, the client device 106 is operated by an operator of a fleet of vehicles, such as an administrator at a car rental agency, while in other embodiments, the client device 106 is operated by the vehicle's owner or driver. In some embodiments, the vehicle data application is enabled by a Feed Consumer API and applies a user interface to present vehicle data collected from the vehicles 102 based on an open source gRPC or other RPC system. The server system 104 provides (202) programs, user interface information, and settings of the vehicle data application to the client devices 106, such that the client device 106 is able to install or load (204) the vehicle data application. The client device 106 executes the vehicle data application, and accesses (206) a user account utilizing a user credential. The user credential optionally includes a user name and a password of the user account. An access level is defined (208) for the user account at the sever system 104 prior to receiving any request from the user account. The access level is used for identifying vehicle data from real-time vehicle data flows 112 collected by the serve system 104, independently of receiving any request from the user account.

Specifically, the access level is used to select vehicles among the plurality of vehicles 102 for the user credential. Once selected, the entire vehicle data flow 112 of each selected vehicle 102 is associated with the user credential and will be provided to a user having the user credential upon request. The access level is defined based on one or more of a VIN number, a vehicle type, a plurality of predefined sensor data types, and a plurality of corresponding sensing thresholds. In some situations, a vehicle data flow 112 of a vehicle 102 does not meet requirements of an access level (e.g., a tire pressure is lower than 25 PSI) at a first time for a user credential, and however, start to meet the requirements at a second time subsequent to the first time. The vehicle data flow 112 of the vehicle 102 is associated with the user credential and will be provided to the user after the second time.

In some embodiments, the access level of the user account is defined and modified by a user associated with an entity owning the server system 104. In some embodiments, a first user account of a client group 122 (e.g., a super user account having a higher access level) defines an access level for a second user account of the same client group 122 (e.g., a regular user account having a lower access level). In some embodiments, a user account is allowed to define or modify its own access right. In some embodiments, the access levels is defined for a user account via a user interface of the vehicle data application.

In some embodiments, a vehicle operator device 124 is involved in controlling a vehicle 102 by sending (210) a vehicle control signal (i.e., a control data flow 126A or 126B) to the vehicle 102. In some embodiments, the vehicle operator device 124 is a device operated by a vehicle manufacturer (i.e., automaker), while in other embodiments it is operated by a fleet operator, and in yet other embodiments, the vehicle operator device is operated by the owner or driver of the vehicle. The vehicle control signal includes one or more control commands, e.g., a remote engine start command. Optionally, the vehicle operator device 124 reports a control data flow 128A to a vehicle data feed server 110 in the server system 104 directly, separately from communicating the vehicle control signal 126 directly or indirectly to the vehicle 102. Optionally, the vehicle 102 reports a control data flow 128B to the vehicle data feed server 110 upon receiving the vehicle control signal from the vehicle operator device 124 directly or indirectly.

The vehicle 102 has a plurality of built-in sensors including, but not limited to, an odometer, speedometer, massive air flow sensor (MAF), engine speed sensor, oxygen sensor, manifold absolute pressure sensor, spark knock sensor, fuel temperature sensor, voltage sensor, throttle position sensor, and tire pressure monitoring system (TPMS). The built-in sensors of the vehicle 102 are configured to capture (212) real-time vehicle data (also called vehicle telemetry data) of the vehicle 102 and submit the captured vehicle data in a real-time vehicle data flow 112. The real-time vehicle data flow 112 includes at least the vehicle telemetry data. In some embodiments, the real-time vehicle data flow 112 is associated with a respective unique flow identifier. The vehicle 102 may have a unique vehicle identifier (e.g., a VIN), and the real-time vehicle data flow 112 is associated with the vehicle 102 by the unique vehicle identifier of the vehicle 102. As a result, the server system 104 receives (214) the real-time vehicle data flow 112 from the vehicle 102, optionally with the control data flow 128 reported by the vehicle 102 or vehicle operator device 124.

In some embodiments, the vehicle 102 reports the vehicle data flow 112 and control data flow 128 immediately after the corresponding vehicle telemetry data is captured by its built-in sensors. The vehicle telemetry data is optionally captured by the built-in sensors at a time of a data event (e.g., a braking event, a car crash, a turn control from a steering wheel) or in the absence of any data event (e.g., periodically). One or more vehicle telemetry data items may be associated with the same data event and sent together in a data message to the vehicle data feed server 110. Alternatively, in some embodiments, the vehicle 102 does not report the vehicle telemetry data immediately after the vehicle telemetry data is captured by its built-in sensors. Instead, the vehicle 102 captures and caches a batch of vehicle telemetry data, and sends the batch of vehicle telemetry data periodically, according to a predefined schedule, after a certain amount of data has been collected, in response to a predefined data event, or on request.

While the real-time vehicle data flows 112 are received from multiple vehicles 102 at the server system 104, vehicle data corresponding to each user account is identified in the real-time vehicle data flows 112 and associated (216) with the respective user account based on the access level associated with the user credential of the respective user account. In some embodiments, part of the vehicle data associated with the user account is identified in the control data flows 128 collected from the vehicles 102 and vehicle operator devices 124, and associated with the respective user account based on the access level associated with the user account. In some embodiments, a hash function is applied to associate the user credential with information of the vehicle data (e.g., flow identifications of the vehicle data flows 112 and control data flows 128 containing the vehicle data).

In some embodiments, the real-time vehicle data flow 112 is consolidated (i.e., grouped) (220) into a respective vehicle data shard of a plurality of vehicle data shards. The respective vehicle data shard is stored in a vehicle database in association with the vehicle 102 (e.g., represented by the unique vehicle identifier) according to a data storage rule. In some situations, the vehicle database (942 of Figure 9) stores a plurality of vehicle data shards. The respective vehicle data shard associated with the real-time vehicle data flow 112 of the vehicle 102 is selected from the plurality of vehicle data shards to balance loads of these vehicle data shards. For example, when the real-time vehicle data flow 112 is initially received at the server system 104, the server system 104 determines a flow rate of the vehicle data flow 112 and/or sizes of one or more vehicle data shards, and associates the vehicle data flow 112 with the respective vehicle data shard having a smallest size among the one or more vehicle data shards.

While the real-time vehicle data flow 112 is collected and stored by the server system 104, the client device 106 sends (222) a vehicle data request 114 with the user credential of the corresponding user account, without interfering with the collection of the data flow 112. The vehicle data request optionally specifies or identifies the access level for selecting the requested vehicle data. The vehicle data request optionally does not refer to the access level associated with the user credential at all. The vehicle data request 114 is optionally used to request the vehicle data associated with the user credential collected before or after the server system 104 receives the vehicle data request 114. In response to the vehicle data request 114, the server system 104 determines (224), based on the user credential, whether the user is authorized to access vehicle data associated with the user credential, where the vehicle data includes a subset of the plurality of real-time vehicle data flows 112. In accordance with a determination that the user is authorized to access the vehicle data associated with the user credential, the server system 104 extracts (226) the requested vehicle data that has been associated with the user credential and forwards the subset of the plurality of real-time vehicle data flows 112 (226) to the requesting client device 106. The subset of the plurality of real-time vehicle data flows 112 includes all data items in real-time vehicle data flows 112 of vehicles 102 selected according to the access level of the user credential.

In some embodiments, supplemental data item 260 can be added or associated with the vehicle 102 at different phases of data communication 200. In some embodiments, the supplemental data item 260 includes a license plate number of the vehicle, integrated circuit card identifier (ICCID), and electronic serial number (ESN). During the course of consolidating the data flow 112, the server system 104 supplements (218) the real-time vehicle data flow 112 with a second supplemental data item 260B associated with the vehicle 102. Alternatively, in some implementations, the second supplemental data item 260B includes a flag attached to a real-time vehicle data flow 112 associated with a vehicle 102, indicating that the real-time vehicle data flow 112 satisfies an access level associated with a user credential. The second supplemental data item 260B is thereby stored with the real-time vehicle data flow 112 in the vehicle database of the server system 104. Alternatively, in some embodiments, the server system 104 provides a first supplemental data item 260A in response to the vehicle data request 114. Each data item in the requested vehicle data 116 associated with the user credential is supplemented (228) with the first supplemental data item 260A. The first supplemental data item 260A may not be stored in association with the respective real-time vehicle data flow 112 in the server system 104, but is transmitted to the client device 106 in conjunction with the respective data item in the requested vehicle data 116 associated with the user credential.

In some embodiments, the requested vehicle data 116 is transmitted (230) to the client device 106 and presented (232) to the user for review via the vehicle data application. A report may be generated to provide analysis results of the requested vehicle data 116. For example, a car rental company may receive a report on the status of all of its vehicles, e.g., including vehicle locations, gas level, and driver information. In another example, a city traffic control department may receive a report on the speeds of all vehicles on city streets at different times of the day.

In some embodiments, the client device 106 generates (234) a vehicle control command based on the requested vehicle data 116 associated with the user credential, and sends (236) the vehicle control command to one of the plurality of vehicles, such that the one of the plurality of vehicles can be controlled based on the vehicle data that is collected in real time from a subset of the plurality of vehicles and accessible to the client device 106. Optionally, the vehicle 102 receiving the vehicle control command is the same vehicle 102 that provides a subset or all of the requested vehicle data 116. If all of the requested vehicle data 116 is provided by the vehicle 102, then the vehicle 102 is controlled solely based on its own feedback. Optionally, the vehicle 102 receiving the vehicle control command is distinct from any vehicle 102 that provides a subset of the requested vehicle data 116, and therefore, is controlled based on a feedback from one or more distinct vehicles 102. The vehicle 102 receiving the vehicle control command may be controlled based on the feedback from another single vehicle 102 or multiple other vehicles 102. It is also noted that the vehicle control command may be delivered to more than one vehicle 102. For example, the requested vehicle data 116 includes an EV charge levels of all rental cars in a fleet owned by a car rental company, and the vehicle control command is sent to each vehicle 102 in the fleet that has a charge level lower than 20%. Each vehicle 102 having a charge level lower than 20% is then controlled to display to its driver a message indicating that the vehicle needs to be charged soon.

The vehicle data 116 can be broadly used by a wide array of entities for concierge service, diagnostics and maintenance, driver behavior analysis, vehicle performance monitoring, fleet management, geo-fencing, emergency road service, smart city management, stolen vehicle tracking, and insurance service. For example, a concierge service offers user accounts with a number of personal services (e.g. mobile car detailing) based on real-time vehicle data concerning a location, fuel level, oil level, and control command of a vehicle associated with each user account. In another example, a diagnostics and maintenance service optimizes maintenance packages and predicts when a vehicle needs to be serviced, repaired or a part replaced based on vehicle health indicators and diagnostic trouble codes. In yet another example, driver behavior may be analyzed based on rapid acceleration or deceleration events in the real-time vehicle data to highlight driving patterns, determine how safe a driver is, or incentivize or guide a driver's behavior. In another example, driver experience can be improved for electric vehicles by analyzing the battery life or distance to a next charge station in the real-time vehicle data. In a fleet management example, vehicle locations, ignition states/status, and fuel levels can be used to efficiently operate and manage a fleet of vehicles. In some embodiment, location information in the real-time vehicle data may be detected when a vehicle enters or exits a geo-fenced location such as a parking lot, and used to track the vehicle, a driver, and the location.

In other embodiments, some of the real-time vehicle data (e.g., impact status, an event with an airbag triggered, a harsh braking event, and heading directions) can be used for routing and planning public safety and emergency responses, thereby decreasing response times, preventing property damage, and saving lives. In a smart city example, vehicle locations, heading directions, and speeds are used to manage congestion, optimize traffic flow, reduce air pollution, and increase public safety. The real-time vehicle data may include a location, vertical inclination, lock status, and/or door status of a vehicle, and be used to determine whether the vehicle has been stolen. Usage-based insurance can be implemented based on a user profile created using the real-time vehicle data, e.g., a driver behavior, odometer reading, location, and ignition on/off time, and constantly monitoring vehicle data of individual vehicles personalizes policyholder experience, increases revenue, and reduces the cost and risk associated with individual insurance policies.

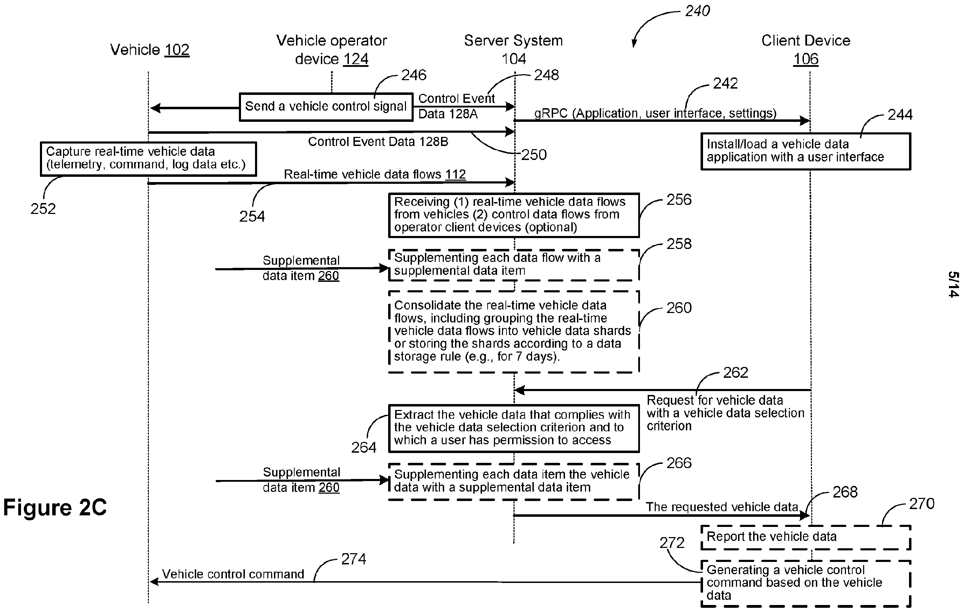

Figure 2C is a flow diagram illustrating data communication 240 among vehicles 102, a server system 104, a client device 106 and a vehicle operator device 124 in accordance with some embodiments. A vehicle data application is installed in the client device 106. In some embodiments, the client device 106 is operated by an operator of a fleet of vehicles, such as an administrator at a car rental agency, while in other embodiments, the client device 106 is operated by the vehicle's owner or driver. In some embodiments, the vehicle data application is enabled by a Feed Consumer API and applies a user interface to present vehicle data collected from the vehicles 102 based on an open source gRPC or other RPC system. The server system 104 provides (242) programs, user interface information, and settings of the vehicle data application to the client devices 106, such that the client device 106 is able to install or load (244) the vehicle data application. The client device 106 executes the vehicle data application, and accesses a user account utilizing a user credential. The user credential optionally includes a user name and a password of the user account.

In some embodiments, a vehicle operator device 124 is involved in controlling a vehicle 102 by sending (246) a vehicle control signal (i.e., a control data flow 126A or 126B) to the vehicle 102. In some embodiments, the vehicle operator device 124 is a device operated by a vehicle manufacturer (i.e., automaker), while in other embodiments it is operated by a fleet operator, and in yet other embodiments, the vehicle operator device is operated by the owner or driver of the vehicle. The vehicle control signal includes one or more control commands, e.g., a remote engine start command. Optionally, the vehicle operator device 124 reports (248) a control data flow 128A to a vehicle data feed server 110 in the server system 104 directly, separately from communicating the vehicle control signal to the vehicle 102. Optionally, the vehicle 102 reports (250) a control data flow 128B to the vehicle data feed server 110 upon receiving the vehicle control signal from the vehicle operator device 124 directly or indirectly.

The vehicle 102 has a plurality of built-in sensors including, but not limited to, an odometer, speedometer, massive air flow sensor (MAF), engine speed sensor, oxygen sensor, manifold absolute pressure sensor, spark knock sensor, fuel temperature sensor, voltage sensor, throttle position sensor, and tire pressure monitoring system (TPMS). The built-in sensors of the vehicle 102 are configured to capture (252) real-time vehicle data (also called vehicle telemetry data) of the vehicle 102 and submit the captured vehicle data in a real-time vehicle data flow 112. The real-time vehicle data flow 112 includes at least the vehicle telemetry data. In some embodiments, the real-time vehicle data flow 112 is associated with a respective unique flow identifier. The vehicle 102 may have a unique vehicle identifier (e.g., a VIN), and the real-time vehicle data flow 112 is associated with the vehicle 102 by the unique vehicle identifier of the vehicle 102. As a result, the server system 104 receives (256) the real-time vehicle data flow 112 from the vehicle 102, optionally with the control data flow 128 reported by the vehicle 102 or vehicle operator device 124.

In some embodiments, the vehicle 102 reports the vehicle data flow 112 and control data flow 128 immediately after the corresponding vehicle telemetry data is captured by its built-in sensors. The vehicle telemetry data is optionally captured by the built-in sensors at a time of a data event (e.g., a braking event, a car crash, a turn control from a steering wheel) or in the absence of any data event (e.g., periodically). One or more vehicle telemetry data items may be associated with the same data event and sent together in a data message to the vehicle data feed server 110. Alternatively, in some embodiments, the vehicle 102 does not report the vehicle telemetry data immediately after the vehicle telemetry data is captured by its built-in sensors. Instead, the vehicle 102 captures and caches a batch of vehicle telemetry data, and sends the batch of vehicle telemetry data periodically, according to a predefined schedule, after a certain amount of data has been collected, in response to a predefined data event, or on request.

In some embodiments, the real-time vehicle data flow 112 is consolidated (i.e., grouped) (260) into a respective vehicle data shard of a plurality of vehicle data shards. The respective vehicle data shard is stored in a vehicle database in association with the vehicle 102 (e.g., represented by the unique vehicle identifier) according to a data storage rule. In some situations, the vehicle database (942 of Figure 9) stores a plurality of vehicle data shards. The respective vehicle data shard associated with the real-time vehicle data flow 112 of the vehicle 102 is selected from the plurality of vehicle data shards to balance loads of these vehicle data shards. For example, when the real-time vehicle data flow 112 is initially received at the server system 104, the server system 104 determines a flow rate of the vehicle data flow 112 and/or sizes of one or more vehicle data shards, and associates the vehicle data flow 112 with the respective vehicle data shard having a smallest size among the one or more vehicle data shards.

While the real-time vehicle data flow 112 is collected and stored by the server system 104, the client device 106 sends (262) a request 114 for vehicle data with the user credential of the corresponding user account, without interfering with the collection of the data flow 112. The request specifies one or more criterion for selecting the requested vehicle data. In response to the request 114, the server system 104 extracts (264) the requested vehicle data from the plurality of vehicle data shards stored in the vehicle database according to the vehicle data selection criterion(s), and, the requested vehicle data is extracted in accordance with a determination that the client device 106 has an access right based on the user credential. After being extracted, the requested vehicle data is provided (268) to the requesting client device 106 (assuming that the user credential matches and the data associated with the criterion(s) is available).

In some embodiments, supplemental data item 260 can be added or associated with the vehicle 102 at different phases of data communication 240. Examples of the supplemental data item 260 includes a license plate number of the vehicle, integrated circuit card identifier (ICCIDD), electronic serial number (ESN). In some embodiments, during the course of consolidating the data flow 112, the server system 104 supplements (258) the real-time vehicle data flow 112 with the supplemental data item 260 associated with the vehicle 102. The supplemental data item 260 is thereby stored with the real-time vehicle data flow 112 in the vehicle database of the server system 104. Alternatively, in some embodiments, the server system 104 provides the supplemental data item 260 in response to the request 114. In some embodiments, each data item in the requested vehicle data 116 is supplemented with a supplemental data item 260. in some embodiments, the supplemental data item 260 is not stored in association with the respective real-time vehicle data flow 112 in the servers stem 104, but is transmitted to the client device 106 in conjunction with the respective data item in the requested vehicle data 116.

In some embodiments, the requested vehicle data 116 is transmitted (268) to the client device 106 and presented (270) to the user for review via the vehicle data application. A report may be generated to provide analysis results of the requested vehicle data 116. For example, a car rental company may receive a report on the status of all of its vehicles, e.g., including vehicle locations, gas level, and driver information. In another example, a city traffic control department may receive a report on the speeds of all vehicles on city streets at different times of the day.

In some embodiments, the client device 106 generates (272) a vehicle control command based on the vehicle data 116 and sends (274) the vehicle control command to one of the plurality of vehicles, such that the one of the plurality of vehicles can be controlled based on the vehicle data that is collected in real time from a subset of the plurality of vehicles and complies with the criterion for selecting the vehicle data. Optionally, the vehicle 102 receiving the vehicle control command is the same vehicle 102 that provides a subset or all of the requested vehicle data 116. If all of the requested vehicle data 116 is provided by the vehicle 102, then the vehicle 102 is controlled solely based on its own feedback. Optionally, the vehicle 102 receiving the vehicle control command is distinct from any vehicle 102 that provides a subset of the requested vehicle data 116, and therefore, is controlled based on a feedback from one or more distinct vehicles 102. The vehicle 102 receiving the vehicle control command may be controlled based on the feedback from another single vehicle 102 or multiple other vehicles 102. It is also noted that the vehicle control command may be delivered to more than one vehicle 102. For example, the requested vehicle data 116 includes an EV charge levels of all rental cars in a fleet owned by a car rental company, and the vehicle control command is sent to each vehicle 102 in the fleet that has a charge level lower than 20%. Each vehicle 102 having a charge level lower than 20% is then controlled to display to its driver a message indicating that the vehicle needs to be charged soon.

The vehicle data 116 can be broadly used by a wide array of entities for concierge service, diagnostics and maintenance, driver behavior analysis, vehicle performance monitoring, fleet management, geo-fencing, emergency road service, smart city management, stolen vehicle tracking, and insurance service. For example, a concierge service offers user accounts with a number of personal services (e.g. mobile car detailing) based on real-time vehicle data concerning a location, fuel level, oil level, and control command of a vehicle associated with each user account. In another example, a diagnostics and maintenance service optimizes maintenance packages and predicts when a vehicle needs to be serviced, repaired or a part replaced based on vehicle health indicators and diagnostic trouble codes. In yet another example, driver behavior may be analyzed based on rapid acceleration or deceleration events in the real-time vehicle data to highlight driving patterns, determine how safe a driver is, or incentivize or guide a driver's behavior. In another example, driver experience can be improved for electric vehicles by analyzing the battery life or distance to a next charge station in the real-time vehicle data. In a fleet management example, vehicle locations, ignition states/status, and fuel levels can be used to efficiently operate and manage a fleet of vehicles. In some embodiment, location information in the real-time vehicle data may be detected when a vehicle enters or exits a geo-fenced location such as a parking lot, and used to track the vehicle, a driver, and the location.

In other embodiments, some of the real-time vehicle data (e.g., impact status, an event with an airbag triggered, a harsh braking event, and heading directions) can be used for routing and planning public safety and emergency responses, thereby decreasing response times, preventing property damage, and saving lives. In a smart city example, vehicle locations, heading directions, and speeds are used to manage congestion, optimize traffic flow, reduce air pollution, and increase public safety. The real-time vehicle data may include a location, vertical inclination, lock status, and/or door status of a vehicle, and be used to determine whether the vehicle has been stolen. Usage-based insurance can be implemented based on a user profile created using the real-time vehicle data, e.g., a driver behavior, odometer reading, location, and ignition on/off time, and constantly monitoring vehicle data of individual vehicles personalizes policyholder experience, increases revenue, and reduces the cost and risk associated with individual insurance policies.

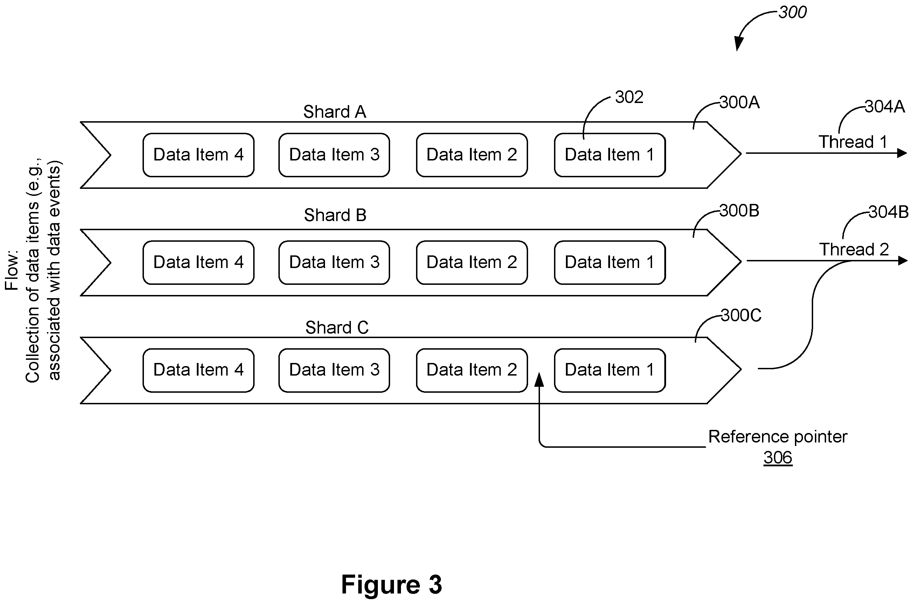

Figure 3 is a diagram of a plurality of vehicle data shards 300 into which a plurality of real-time vehicle data flows 112 is organized in accordance with some embodiments. After collecting the real-time vehicle data flows 112 from the vehicles 102, the vehicle data feed server 110 consolidates these data flows 112 by grouping them into the plurality of vehicle data shards 300 that is optionally stored in a vehicle database of the server system 104. In some embodiments, the vehicle data feed server 110 also collects control data flows 128 from a plurality of vehicle operator devices 124 and/or the vehicles 102, and groups the control data flows 128 into the vehicle data shards 300 in conjunction with the real-time vehicle data flows 112. Prior to receiving a vehicle data request 114 from a user of a client device 106 and while collecting the real-time vehicle data flows 112, the vehicle data feed server 110 associates a subset of the plurality of vehicle data shards 30 with a user credential associated with the user based on an access level associated with the user credential. In some embodiments, a hash function is applied to associate the user credential with information of the vehicle data (e.g., shard identifications of the vehicle data vehicle data shards 300 containing the vehicle data). Upon receiving the vehicle data request 114, the requested vehicle data associated with the user credential (e.g., the subset of the plurality of vehicle data shards 30) is extracted and transmitted to the requesting client device 106 in the substantially real-time data feed 116 in response to the vehicle data request 114.

In some embodiments, the server system 104 stores a predefined number of vehicle data shards 300 (e.g., 24 vehicle data shards). Each real-time vehicle data flow 112 is entirely grouped in a respective one of the predefined number of vehicle data shards 300. For example, each real-time vehicle data flow 112 is associated with a unique flow identification or a unique vehicle identification of a corresponding vehicle 102. A hash function is applied to assign each real-time vehicle data flow 112 to a single respective vehicle data shard based on the unique flow or vehicle identification, and all data items in the respective vehicle data flow related to the corresponding vehicle 102 are thereby consolidated within the respective vehicle data shard. Optionally, each vehicle data shard 300 can group an unlimited number of vehicle data flows 112. In some embodiments, the real-time vehicle data flows 112 are randomly grouped, i.e., randomly assigned to the vehicle data shards 300. In some embodiments, the real-time vehicle data flows 112 are grouped based on groups to which the corresponding vehicles 102 belong. For example, the real-time vehicle data flows 112 of the vehicle 102 of the same make (e.g., all Ford vehicles) are consolidated into the same vehicle data shard 300. In another example, the real-time vehicle data flows 112 of the vehicle 102 owned by the same car rental company (e.g., Avis) are consolidated into the same vehicle data shard 300. Alternatively, in some embodiments, when the vehicle data feed server 110 initially receives each real-time vehicle data flow 112, it selects the respective vehicle data shard 300 from the predefined number of vehicle data shards 300 based on loads of these vehicle data shards 300, thereby balancing the loads of these vehicle data shards 300. For example, the respective real-time vehicle data flow 112 is assigned to the respective vehicle data shard 300 having a smallest load of data flows or to one of a subset of vehicle data shards 300 having smaller loads of data flows compared with remaining vehicle data shards 300.

In some embodiments, each real-time vehicle data flow 112 further includes one or more of control event data, control command, vehicle-to-device binding event data, sensor readings, and log data associated with a respective vehicle 102. The real-time vehicle data flow 112 may be identified by a respective unique flow identifier. For example, the unique flow identifier includes a serial number, e.g., *12345678-910-111201314-151617181920* or a fully qualified flow name, e.g., *aui:flow:feed*/*somevendor*/*someregion-full.* Each real-time vehicle data flow 112 may include a plurality of data messages sequentially received from a corresponding vehicle 102 as individual messages or in batches, and each message includes a single data item 302 or a plurality of data items 302. Also, each of the plurality of vehicles 102 has a unique vehicle identifier (e.g., a VIN of the respective vehicle 102), and each real-time vehicle data flow 112 is associated with the respective vehicle 102 by the unique vehicle identifier of the respective vehicle 102. In some embodiments, when the plurality of real-time vehicle data flows 112 is grouped into the plurality of vehicle data shards 300, each data item of the plurality of real-time vehicle data flows 112 is converted into a respective data item 302 of the plurality of vehicle data shards 300 according to a common format.

It is noted that the plurality of vehicle data shards 300 may be stored in the vehicle database according to a predefined data storage rule. Each real-time vehicle data flow 112 optionally has a respective data storage rule. For example, data items 302 cannot be stored for more than seven days in the vehicle database, and must be purged after the seven days expire. A first type of data items 302 may have a priority over a second type of data items 302. Data items 302 of a first real-time vehicle data flow 112 may have a priority over data items 302 of a second real-time vehicle data flow 112.

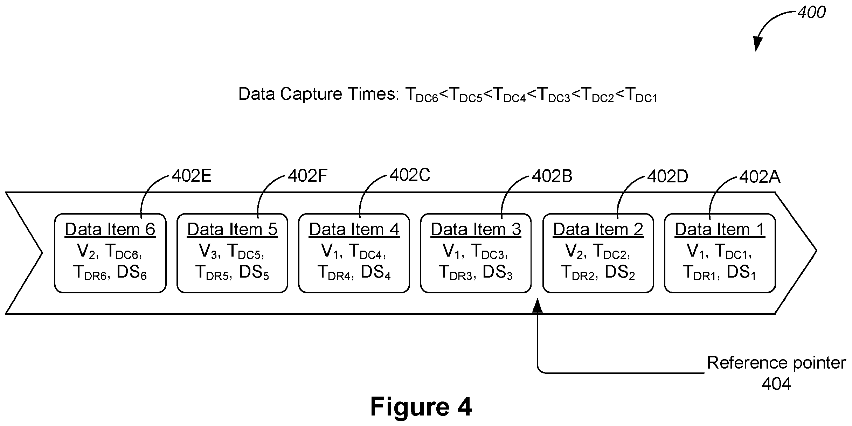

In some embodiments, for each vehicle data shard, a subset of the real-time vehicle data flows 112 received by the server system 104 is grouped into the respective vehicle data shard sequentially according to a temporal order. Stated another way, when the subset of the real-time vehicle data flows 112 are grouped, data items 302 of the real-time vehicle data flows 112 are mixed with each other, and arranged sequentially according to the temporal order. Each data item 302 may be associated with a data event (e.g., receiving a control command of starting an engine) and include a timestamp and one or more sensor readings (e.g., readings from an oxygen sensor, an odometer, and tire pressure sensors) associated with the data event. As such, in this example, the data items 302 coming from different vehicles 102 can be organized in each vehicle data shard 300 according to their timestamps associated with the data events of these vehicles 102. More details on the temporal order of the data events are discussed below with reference to Figure 4.

Alternatively, in some embodiments, for each vehicle data shard, a subset of the real-time vehicle data flows 112 received by the server system 104 is grouped into the respective vehicle data shard and organized by individual data flows. Data items of each real-time vehicle data flow 112 are stored together in the vehicle database of the server system 104. The server system 104 receives a present request from a client device 106, and identifies one or more reference pointers 306 in the plurality of vehicle data shards (e.g., in the vehicle data shard 300C) in response to the present request. Data items captured or collected prior to the one or more reference pointers 306 are configured to provide the vehicle data associated with the user credential in response to a previous request that is received from the same client device 106 and prior to the present request. The data items captured or collected subsequently to the one or more reference pointers 306 are then configured to provide the vehicle data associated with the user credential in response to the present request.

In some embodiments, the plurality of vehicle data shards 300 are provided to more than one client device 106. A first client device 106 makes a first request for first vehicle data, and the first vehicle data is extracted from a first vehicle data shard 300A in response to the first request. The vehicle data feed server 110 also receives from a second user of a second client device 106 a second user credential and a second request for second vehicle data. While receiving the real-time vehicle data flows 112, the vehicle data feed server 110 optionally associates the second vehicle data in the real-time vehicle data flows 112 with the second user credential based on a second access level of the second user, e.g., using a hash function or by marking the second vehicle data with a flag. In response to the second request, independently of the first request, the vehicle data feed server 110 determines whether the second user is authorized to access the second vehicle data that is associated with the second user credential and includes a second subset of the plurality of real-time vehicle data flows. In accordance with a determination that the second user is authorized to access the second vehicle data associated with the second user credential, the server system 104 extracts from a second vehicle data shard 300B the second vehicle data including the second subset of the plurality of real-time vehicle data flows 112, and forwards the second vehicle data as a second substantially real-time data feed to the second client device 106 via the one or more communication networks 108. The second vehicle data is extracted from the second vehicle data shard 300B, independently of the first vehicle data being extracted from the first vehicle data shard 300A.

Further, in some embodiments, when two vehicle data are requested by two distinct client devices 106, these two vehicle data are optionally provided by the same vehicle data shard 300 or by distinct vehicle shards 300. In the above embodiments involving the first and second requests from the first and second client devices 106, the first vehicle data is different from the second vehicle data. The first and second vehicle data may come from the same vehicle data shard 300A in Thread 1, and the first and second requests are processed sequentially in Thread 1. The first and second vehicle data may come from two vehicle data shards 300A and 300B, respectively. In some situations, the first and second requests are processed concurrently, but in two separate threads 304A and 304B, by the server system 104. In some situations, the first and second requests are processed sequentially in the two threads 304A and 304B. A first thread 304A associated with the first request uses the first vehicle data shard 300A, and a second thread 304B associated with the first request uses the second vehicle data shard 300B. Optionally, a thread (e.g., 304B) associated with a request involves two or more vehicle data shards (e.g., 300B and 300C), and extract the requested vehicle data from the two or more vehicle data shards.

Generally, the shards 300 enable highly scalable feed consumption by launching multiple consumer threads 304A and 304B with each thread consuming from a subset of shards 300 (e.g., one shard 300) independently. Whereas a flow may include data from a specific rental fleet, a shard 300 represents data from a smaller number of vehicles 102 where all the data for a specific vehicle 102 is always in the same shard 300. The number of vehicles 102 or devices 124 present on a shard 300 is potentially unbounded. A reference pointer is a bookmark pointer to a single data item within a shard, amongst a series of data items in a collection of shards within a flow stream. Reference pointers are used to track which data items have already been processed, acting as a bookmark to allow processing to resume without repeating data already handled, or accidentally skipping new data. Shard identifiers and reference pointers are handled as opaque blobs of data by clients. A data event of a shard 300 (also called a feed event) is a data object carrying information produced by a vehicle 102 and connected devices 124. The information can include vehicle telemetry, over-the-air (OTA) events, command and control events, and vehicle to device binding events.

Figure 4 is an exemplary vehicle data shard 400 that organizes data items sequentially according to a temporal order in accordance with some embodiments. The data items of the vehicle data shard 400 are collected from the real-time vehicle data flows 112 corresponding to the vehicles 102. Each real-time vehicle data flow 112 may include a plurality of data messages sequentially received from a corresponding vehicle 102 as individual messages or in batches, and each message includes a single data item 402 or a plurality of data items 402. Each data item 302 is associated with a data event (e.g., receiving a control command of starting an engine) and includes a timestamp and one or more sensor readings (e.g., readings from an oxygen sensor, an odometer, and tire pressure sensors) associated with the data event. Optionally, two or more data items 302 are associated with a single data event, and record readings from different sensors.

In some situations, each vehicle 102 reports the data items 402 as soon as the respective vehicle 102 captures the data items 402, and each data item has a data capture time *T_{DC}* and a data report time *T_{DR}* that is substantially concurrent with the data capture time. In some situations, each vehicle 102 reports captures the data items 402, and delays reporting of the data items 402 to report them in batch. Each data item has a data capture time *T_{DC}* and a data report time *T_{DR}* subsequent to the data capture time *T_{DC}.* In some embodiments, the data items 302 of the real-time vehicle data flows 112 provided by different vehicles 102 are mixed with each other in the vehicle data shard 400, and ordered sequentially according to a temporal order, e.g., their respective capture times *T_{DC}.* In an example, three data items 402A, 402B and 402C of a first vehicle data flow 112 are sequentially ordered based on their capture times *T_{DC1}, T_{DC3},* and *T_{DC4}* of three data events. The three data items 402A, 402B and 402C of the first vehicle data flow 112 are intervenes with two data items 402D and 402E received from a second vehicle data flow 112 of a second vehicle and a data item 402F received from a third vehicle data flow 112 of a third vehicle. The data items 402A-402F are organized according to the corresponding capture times *T_{DC}.*

In some embodiments, the server system 104 receives a present request from a client device 106, and identifies a reference pointer 404 in the plurality of vehicle data shards (more specifically, in the vehicle data shard 400) corresponding to a temporal location in response to the present request. The real-time vehicle data flows 112 captured or collected prior to the temporal location is configured to provide vehicle data in response to a previous request. The previous request is received from the same client device 106 and prior to the present request, and corresponds to the same access level for selecting vehicle data. The real-time vehicle data flows 112 captured or collected subsequently to the temporal location is configured to provide vehicle data in response to the present request.

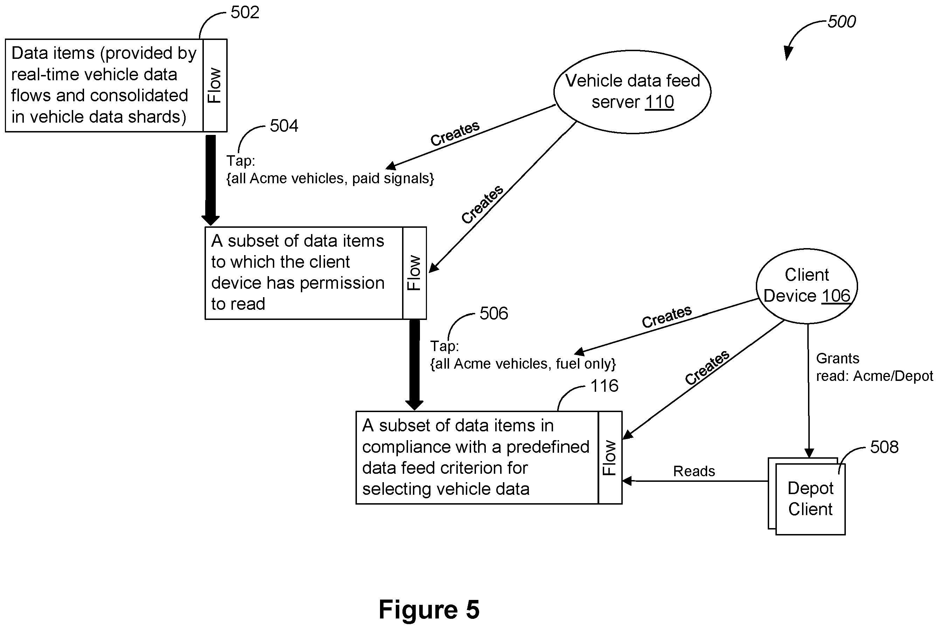

Figure 5 is a flow diagram of an exemplary vehicle data communication process 500 that is controlled by an access level associated with a user credential in accordance with some embodiments. The plurality of real-time vehicle data flows 112 collected and stored in the server system 104 has been associated with user accounts or user credentials of different users according to their associated access levels, independently of whether the server system 104 receives a vehicle data request 114. In response to the vehicle data request 114, the server system 104 controls a flow of data items provided by a data source by two levels of taps to extract requested vehicle data from the data items. The data source providing the data items 502 includes a plurality of real-time vehicle data flows 112 received from the plurality of vehicles 102 via the one or more communication networks 108 or a plurality of vehicle data shards 300 consolidated from the real-time vehicle data flows 112. The two levels of taps includes a first tap 504 related to an access level associated with a client device 106, which issues the vehicle data request 114, and a second tap 506 corresponds to a predefined data feed criterion for further selecting the requested vehicle data 116. By these means, the first and second taps 504 and 506 control delivery of the subset of the real-time vehicle data flows 112 that has been associated with the user credential to the associated user account to produce more meaningful and specific vehicle information, e.g., VIN, speed, and odometer, resulting in a new unified output flow (i.e., a substantially real-time data flow 116 in Figures 1A and 1B). These taps and corresponding flows are represented in a direct acyclic graph, i.e., a topology, as shown in the vehicle data communication process 500.

The client device 106 has a web browser or a dedicated vehicle data application, and a user 120 logs onto a user account on the client device 106 to request the vehicle data via the web browser or dedicated vehicle data application. The access level associated with the client device 106 is determined for the user account. The user account corresponds to a user credential, e.g., a user name and a password of the user account. Upon receiving the user credential, the server system 104 determines the access level of the client device 106 to the data items 502. As such, the first tap 504 identifies a subset of the data items 502 that are accessible to the client device 106 based on the user credential provided by the client device 106.

In an example, a user credential is associated with a car rental company that has an access level to review vehicle data of a set of Ford Focus cars in the United States. Some cars in the set of Ford Focus cars are owned by the car rental company. Other cars in the set of Ford Focus cars are not owned by the car rental company, but corresponding vehicle data are open to the car rental company based on a commercial agreement. As a result, the subset of data items 502 controlled by the first tap 504 includes real-time vehicle data flows 112 provided by all cars in the set of Ford Focus cars, and the car rental company can use vehicle data of both its own Ford Focus cars and some Ford Focus cars it does not own.

The requested vehicle data 116 is identified from the subset of data items 502 after the second tap 506 is applied. A user associated with the user credential has been associated with a predefined data feed criterion, e.g., for selecting vehicle data of fuel levels in all Ford Focus cars in the fleet of the car rental company. The selected vehicle data has been identified in the collected data items 152 before the server system 104 receives any request from the client device 106. In an example, a client device 106 associated with a car rental company sends a request 114. The data items that are not related to fuel levels and the data items related to Ford Focus cars that are not owned by the car rental company are filtered out by the second tap 506, and only the identified data items related to the fuel levels in all Ford Focus cars in the fleet of the car rental company are provided to the client device 106 as a real-time data feed 116 in response to the vehicle data request 114. In some embodiments, the requested vehicle data 116 is stored, and one or more alternative user accounts 508 in the same client group are permitted to review the requested vehicle data 116. Further, in some embodiments, the client device 106 is configured to apply a data filter locally to the vehicle data 116 in the substantially real-time data feed to identify a subset of the vehicle data 116.

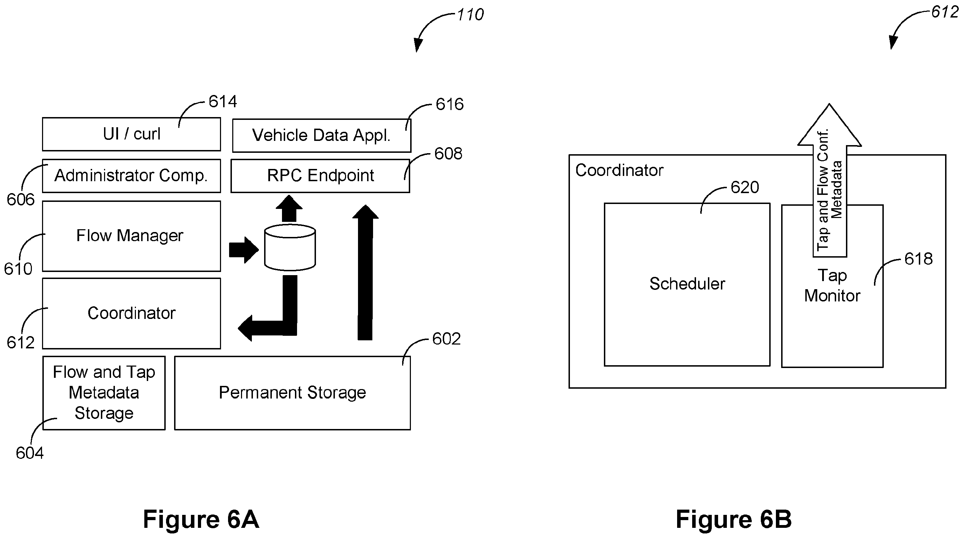

Figure 6A is a block diagram of an example vehicle data feed server 110 that is configured to manage a vehicle data communication process in accordance with some embodiments, and Figure 6B is a block diagram of a coordinator module 612 of the vehicle data feed server 110 that is configured to manage access levels and predefined data feed criteria associated with vehicle data requests of different user accounts during the course of communicating vehicle data in accordance with some embodiments. The vehicle data feed server 110 includes a permanent storage 602, a flow and tap metadata storage 604, an administrator component 606, a Remote Procedure Call (RPC) endpoint 608, a flow manager 610, and a coordinator 612.

The permanent storage 602 includes a vehicle database storing the real-time vehicle data flows 112. In some embodiments, the real-time vehicle data flows 112 are consolidated into a plurality of vehicle data shards 300. In some embodiments, data items of the real-time vehicle data flows 112 are organized in the vehicle database according to a temporal order (i.e., in a time-series manner). In some embodiments, a real-time vehicle data flow 112 stored in the vehicle database has a predetermined life span (e.g., seven days) after which the real-time vehicle data flow 112 is deleted. The predetermined life span may be configured for each individual vehicle data flow 112 of a respective vehicle 102.

Conversely, the flow and tap metadata storage 604 is configured to store tap and flow configuration metadata. In some embodiments, the tap and flow configuration metadata is stored indefinitely in the storage 604, and never purged therefrom. In some embodiments, the tap and flow configuration metadata is only purged from the storage 604 if the storage 604 is full. Optionally, earlier configuration metadata is purged prior to later configuration metadata. In some embodiments, the plurality of real-time vehicle data flows 112 is stored in the vehicle database of the vehicle data feed server 110 for a first period of time (e.g., seven days). Tap and flow configuration metadata 622 corresponds to the plurality of real-time vehicle data flows 112 and the vehicle data request 114 received from the client device 106, and is stored in the flow and tap metadata storage 604 for a second period of time that is greater than the first period of time. For example, the configuration metadata 622 is stored in the storage 604 for an unlimited period of time.

The administrator component 606 manages taps (e.g., the taps 504 and 506 in Figure 5) and process flows of processing data items 502. This includes creation, deletion and updates of the taps, and creation and deletion of the corresponding process flows of the data items 502.

The RPC endpoint 608 authenticates an RPC client (e.g., the client device 106 or a user account) that is issuing a vehicle data request 114 to the vehicle data feed server 110. The RPC client 106 can request a stream of data starting at different points in time (e.g., starting from an earliest timestamp, a latest timestamp, or a specific day) or at a reference pointer 306 or 404. As a corollary, a vehicle data application allows the RPC client 106 to review the requested vehicle data 116 as many times as desired during a life span of the vehicle data 116. In some implementations, a feed software development kit (SDK) is applied to interact with the RPC endpoint 608. Optionally, the RPC endpoint 608 is based on a GOOGLE RPC system.

The flow manager 610 manages the vehicle data communication process 500 based on an access level of a client device 106 and a request including a criterion for selecting vehicle data, and maintains the tap and flow configuration metadata 622 in the flow and tap metadata storage 604.

The coordinator 612 takes the tap and flow configuration metadata 622 from the flow manager 510 or from the flow and tap metadata storage 604, and provisions processing units to respond to the vehicle data request 114. In some embodiments, the coordinator 612 includes a tap monitor 618 for monitoring health of the taps and a scheduler 620 for providing a placement strategy for the taps. The coordinator 612 has multiple provisioning strategies to adapt to the environment. A tap can run within the coordinator 612 as an independent process or in an independent processing module. In some embodiments, the coordinator 612 periodically monitors any activity that results in creation or deletion of taps. In an example, each user account is associated with an access level or a predefined data feed criterion that is applied by the server system 104 to pre-process the real-time vehicle data flows 112 collected from the vehicles 102, e.g., by marking vehicle data corresponding to the access level or predefined data feed criterion. A hash table or function may be created to associate the user credential with information of the vehicle data (e.g., identifications of the vehicle data flows 112 or shards 300 containing the vehicle data). Upon receiving a request from a user account, the coordinator 612 provisions processing units to verify the access level associated with the user credential of the user account and extract the vehicle data pre-processed from the real-time vehicle data flows 112 in a vehicle data communication process 500 established according to the tap and flow configuration metadata 622.

In some embodiments, the vehicle data feed server 110 further includes a user interface module 614 for providing and enabling display of a user interface in which settings, requested vehicle data, and/or other data for one or more client devices 106 can be configured and/or reviewed via a client device 106. In some embodiments, the vehicle data feed server 110 further includes a server-side vehicle data application module 616 that enables server-side functionalities associated with the web browser and dedicated vehicle data application implemented at client devices 106 for receiving a vehicle data request 114, receiving the requested vehicle data 116, and if needed, issuing a vehicle control command 118.

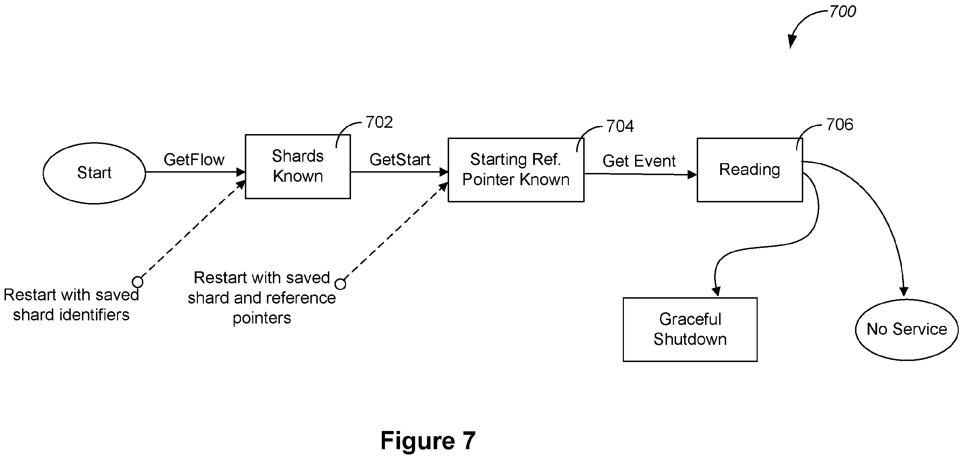

Figure 7 is a flow diagram of another exemplary vehicle data communication process 700 that is based on vehicle data shards 300 in accordance with some embodiments. The vehicle data communication process 700 includes a flow of data items that is processed by a plurality of taps in response to a vehicle data request 114. The vehicle data request 114 is issued by a client device 106 to request vehicle data from a plurality of vehicle data shards 300. The plurality of vehicle data shards 300 are identified by a plurality of shard identifiers. Prior to receiving the vehicle data request 114, while collecting the real-time vehicle data flows 112, the server system 114 identifies an access level associated with a user account. In some implementations, a hash function is established between a user credential of the user account and a subset of the shard identifiers that identifies a subset of the vehicle data shards 300. The subset of the vehicle data shards 300 satisfies the access level of the user account, and contains the requested vehicle data 116. In response to the vehicle data request 114, the server system 104 obtains (702) the subset of shard identifies associated with a subset of vehicle data shards 300, e.g., from the hash function using the user credential.

Alternatively, in some embodiments, a hash function is established between the user credential of the user account and a subset of flow identifiers that identifies a subset of the real-time vehicle data flows 112. The subset of the real-time vehicle data flows 112 is accessible to the user account based on the associated access level, and contains the requested vehicle data 116. In response to the vehicle data request 114, the hash function is used to identify information of real-time vehicle data flows 112 from which the requested vehicle data 116 is to be extracted. The information of real-time vehicle data flows 112 optionally includes the subset of flow identifiers (e.g., *aui:flow:feed*/*somevendor*/*some region-full*)*.* A data flow interface obtains the information of real-time vehicle data flows 112, and determines the subset of shard identifiers associated with the subset of vehicle data shards 300 containing the requested vehicle data 116.

The server system 104 identifies (704) one or more reference pointers 306 in the subset of vehicle data shards 300 associated with the subset of shard identifiers. Optionally, each reference pointer 306 refers to a respective data item of a shard 300, which is the last data item in a subset of data items processed in response to a previous request. The previous request is identical to the vehicle data request 114, and received before the vehicle data request 114.

In response to the vehicle data request 114, data items following the reference pointer 404 in the subset of vehicle data shards 300 are processed using taps (e.g., access levels, criteria for selecting vehicle data) in an example vehicle data communication process 500. Specifically, a data stream transfer is done individually for each shard, using an identification of the vehicle data request 114 (i.e., a name of a process flow in Figure 5), a shard identifier, and a reference pointer to a data item in the respective shard 300. As a result, the requested vehicle data that has been identified in the real-time vehicle data flows 112 or the vehicle data shards 300 is extracted (706) from the real-time vehicle data flows 112 or vehicle data shards 300.

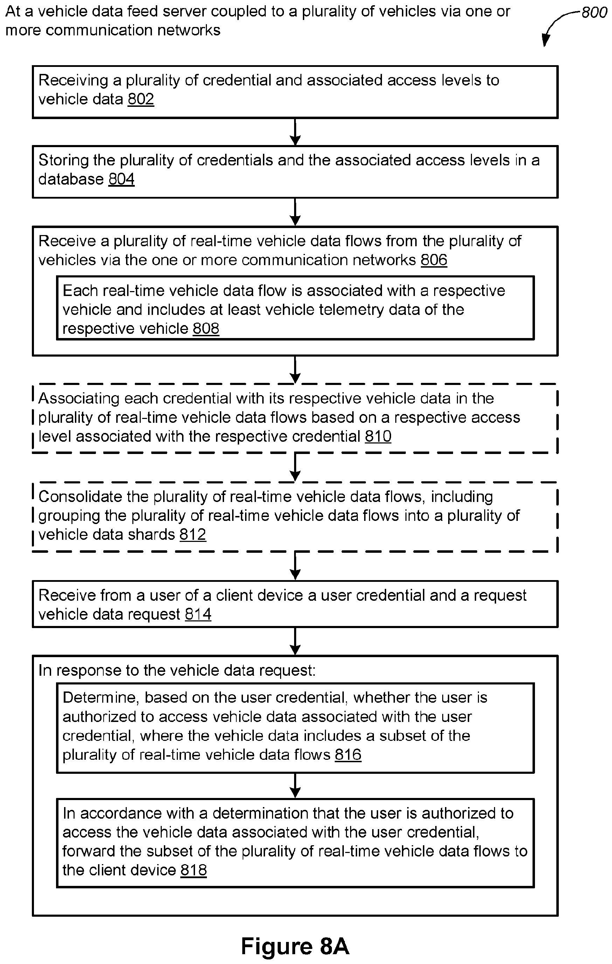

Figure 8A is a flow diagram of a method 800 of communicating vehicle data via a vehicle data feed server 110 in accordance with some embodiments. Method 800 is, optionally, governed by instructions that are stored in a non-transitory computer readable storage medium and that are executed by one or more processors of the computer system (e.g., a server system 104). Each of the operations shown in Figure 8A may correspond to instructions stored in the computer memory or computer readable storage medium (e.g., memory 906 of a server system 104 in Figure 9) of the server system 104. The computer readable storage medium may include a magnetic or optical disk storage device, solid state storage devices such as Flash memory, or other non-volatile memory device or devices. The computer readable instructions stored on the computer readable storage medium may include one or more of: source code, assembly language code, object code, or other instruction format that is interpreted by one or more processors. Some operations in method 800 may be combined and/or the order of some operations may be changed.

The vehicle data feed server 110 is coupled to a plurality of vehicles 102 via one or more communication networks 108. The vehicle data feed server 110 receives (802) a plurality of credentials and associated access levels to vehicle data and stores (804) the plurality of credentials with the associated access levels in a database. In some implementations, for each credential, the access level includes user defined conditions used to select one or more vehicles among the plurality of vehicles 102. Once selected, the entire vehicle data flow 112 of each selected vehicle 102 is associated with the respective credential and will be provided to a user having the credential upon request. The access level associated with each credential is defined based on one or more of a VIN number, a vehicle type, a plurality of predefined sensor data types, and a plurality of corresponding sensing thresholds of the vehicles 102. For example, the access level defines that a certain credential has an access to data for all red Ford pickups or all Nissan sedans having mileage readings greater than 50,000 miles. However, the access level does not treat two types of data items in a vehicle data flow 112 of each red Ford pickups differently, e.g., does not keep mileage data while sending gas pressure data in the respective vehicle data flow 112 to the user having the credential. The user may apply an additional filter at the client device 106 after receiving the vehicle data flow 112.

In some implementations, owners of this vehicle data service and users of a client group of this vehicle data service, independently or jointly, define the credentials and associated access level of a user account in the client group. The vehicle data feed server 110 receives (806) a plurality of real-time vehicle data flows 112 from the plurality of vehicles 102 via the one or more communication networks 108. Each real-time vehicle data flow is associated (808) with a respective vehicle and includes at least vehicle telemetry data of the respective vehicle. Optionally, each real-time vehicle data flow 112 further includes one or more of control event data, control command, vehicle-to-device binding event data, sensor readings, and log data associated with the respective vehicle 102. In some embodiments, each real-time vehicle data flow 112 is associated with a respective unique flow identifier. Each of the plurality of vehicles 102 has a unique vehicle identifier, and each real-time vehicle data flow is associated with a respective vehicle 102 by the unique vehicle identifier of the respective vehicle 102.

In some implementations, for each credential, respective vehicle data 116 (i.e., a subset of the plurality of real-time vehicle data flows 112) is then associated with (810) the respective credential according to an access level of the respective credential. As such, for each credential, the vehicle data has been conditioned (e.g., marked) by the vehicle data feed server 110 before any request has been received from the user having the respective credential, and the vehicle data associated with the respective credential can be promptly identified and provided to the user in response to a request for the vehicle data. Specifically, for each credential, the access level selects one or more vehicles among the plurality of vehicles 102, and the entire vehicle data flow 112 of each selected vehicle 102 is associated with the respective credential and will be provided to a user having the credential upon request. In some embodiments, the access level associated with each credential is configured to identify the respective vehicle data associated with the respective credential from the real-time vehicle data flows 112, and is defined based on one or more of a VIN number, a vehicle type, a plurality of predefined sensor data types, and a plurality of corresponding sensing thresholds.

In some embodiments, the plurality of real-time vehicle data flows 112 is consolidated (812) and grouping into a plurality of vehicle data shards 300. Each data flow 112 may be grouped into a respective vehicle data shard 300 based on a respective flow identification or vehicle identification. A hash function is applied to identify the respectively vehicle data shard 300 based on the respective flow or vehicle identification. Once a data flow 112 is assigned to a vehicle data shard 300, all of its data items are stored in the vehicle data shard 300. All data items related to the vehicle corresponding to the data flow 112 are therefore consolidated within the same vehicle data shard 300.

In some situations, each of the plurality of real-time vehicle data flows 112 is supplemented with a second supplemental data item, and the second supplemental data item and the respective real-time vehicle data flow 112 are grouped in a respective vehicle data shard 300. In some embodiments, when the plurality of real-time vehicle data flows 112 is grouped into the plurality of vehicle data shards 300, each data item of the plurality of real-time vehicle data flows is converted into a respective data item of the plurality of vehicle data shards according to a common format. In some embodiments, the plurality of vehicle data shards 300 includes a predefined number of vehicle data shards (e.g., 24 shards), and each of the plurality of real-time vehicle data flows 112 is entirely grouped in a respective one of the vehicle data shards 300. The plurality of vehicle data shards 300 are stored in a vehicle database of the vehicle data feed server 110 according to a pre-defined data storage rule (e.g., stored for seven days). In some embodiments, for each vehicle data shard 300, a subset of the real-time vehicle data flows 112 is grouped into the respective vehicle data shard 300 sequentially according to a temporal order.

The vehicle data feed server 110 receives (814) from a user of a client device 106 a user credential and a vehicle data request 114. The vehicle data request may not include the access level associated with the user credential, because the vehicle data associated with the user credential has been identified from the plurality of real-time vehicle data flows 112 or from the plurality of vehicle data shards consolidated from the data flows 112. In some situations, the vehicle data request 114 is received to request the vehicle data associated with the user credential from the plurality of vehicle data flows that has been collected by the server 110. Alternatively, in some situations, the vehicle data request 114 is received to request vehicle data from a plurality of vehicle data flows that will be collected by the server 110. In some embodiments, the client device 106 is configured to execute a vehicle data application via a user account thereof. The user account corresponds to the user credential, and the user credential includes a user name and a password of the user account.

In response to the vehicle data request 114, the vehicle data feed server 110 determines (816), based on the user credential, whether the user is authorized to access vehicle data 616 associated with the user credential. The vehicle data includes a subset of the plurality of real-time vehicle data flows. In accordance with a determination that the user is authorized to access the vehicle data associated with the user credential, the vehicle data feed server 110 forwards (818)the subset of the plurality of real-time vehicle data flows to the client device 106 via the one or more communication networks. The vehicle data 116 associated with the user credential may be presented to the user via a vehicle data application executed on the client device 106. In some embodiments, a data item in the vehicle data 116 associated with the user credential is supplemented with a first supplemental data item, and the first supplemental data item is transmitted to the client device 106 in conjunction with the respective data item in the vehicle data 116 associated with the user credential. In some embodiments, the client device 106 is configured to apply a data filter locally to the vehicle data associated with the user credential to identify a subset of the vehicle data 116. In some embodiments, the client device 106 is configured to generate a vehicle control command 118 based on the vehicle data 116 and send the vehicle control command 118 to one of the plurality of vehicles 102, such that the one of the plurality of vehicles 102 can be controlled based on the vehicle data that is collected in real time from at least a subset of vehicles 102.

The vehicle data associated with the user credential includes the subset of real-time vehicle data flows 112. For each of the subset of real-time vehicle data flows 112, a second supplemental data item is determined according to the access level associated with the user credential, indicating that the respective real-time vehicle data flow is part of the vehicle data associated with the user credential. In an example, the second supplemental data item includes a flag attached to the respective real-time vehicle data flow 112 in the subset indicating that the respective real-time vehicle data flow 112 is part of the vehicle data selected for the user credential. In another example, a second supplemental data item corresponds to a hash function correlating each of a plurality of user credentials with respective information of the subset of vehicle data flows 112 corresponding to the vehicle data associated with the user credential to be requested (e.g., a hash function correlating each user credential with flow identifiers of the subset of vehicle data flows 112).

In some embodiments, the vehicle data request 114 received from the client device 106 includes a present request. In response to the present request, the vehicle data feed server 110 identifies a reference pointer 404 in the plurality of vehicle data shards 300 corresponding to a temporal location. The real-time vehicle data flows 112 collected prior to the temporal location is configured to provide the vehicle data associated with the user credential in response to a previous request that is received from the client device 106. The previous request is received prior to the present request. The real-time vehicle data flows 112 collected subsequently to the temporal location is configured to provide the vehicle data associated with the user credential in response to the present request.

In some embodiments, the vehicle data request 114 received from the client device 106 includes a first request, and the requested vehicle data 116 includes first vehicle data associated with the user credential that is extracted from a first vehicle data shard 300 in response to the first request. The vehicle data feed server 110 receives from a second user of a second client device a second user credential and a second request for second vehicle data. While collecting the real-time vehicle data flows, the second vehicle data may have been associated with the second user credential of the second user according to a second access level associated with the second user credential. In response to the second request, independently of the first request, the vehicle data feed server 110 determines, based on the second user credential, whether the second user is authorized to access second vehicle data associated with the second user credential. The second vehicle data includes a second subset of the plurality of real-time vehicle data flows. In accordance with a determination that the second user is authorized to access the second vehicle data associated with the second user credential, the vehicle data feed server 110 then forwards the second subset of the plurality of real-time vehicle data flows to the second client device. The second vehicle data is extracted from a second vehicle data shard, independently of the first vehicle data being extracted from the first vehicle data shard. In some embodiments, the first vehicle data and second vehicle data are distinct, and optionally extracted from the same vehicle data shard or two distinct vehicle shards. Alternatively, in some embodiments, the first vehicle data and second vehicle data may be identical and extracted from the same vehicle shard even though the first and second requests are distinct and different from each other.

Optionally, the first and second vehicle data shards are the same vehicle data shard. The first and second client devices may extract their respective requested vehicle data (which are identical or distinct) from the same shard sequentially in a processing thread. Optionally, the first and second vehicle data shards are different. If the first and second vehicle data shards are assigned to the same processing thread, the first and second client devices may extract their respective requested vehicle data from the different vehicle data shards sequentially in the same processing thread. If the first and second vehicle data shards are assigned to two distinct processing threads, the first and second client devices may extract their respective requested vehicle data from the different vehicle data shards sequentially or concurrently in the two distinct processing threads.

In some embodiments, the plurality of real-time vehicle data flows 112 are stored in the database of the vehicle data feed server 110 for a first period of time. Configuration metadata is generated and corresponds to the plurality of real-time vehicle data flows and the vehicle data request received from the client device. The configuration metadata is stored in the database for a second period of time that is greater than the first period of time. Stated another way, the configuration metadata is stored for a longer period of time, and the plurality of real-time vehicle data flows 112 is purged from the vehicle database prior to the configuration metadata.

Further, in some embodiments, the vehicle data feed server 110 is communicatively coupled to one or more vehicle operator devices 124 via the one or more communication networks 108, and receives one or more control data flows 128 from the one or more vehicle operator devices 124 or the vehicles 102. Each control data flow includes one or more control commands, and each command is issued by a respective vehicle operator device to control a respective subset of the plurality of vehicles. The one or more control data flows 128 are consolidated with the plurality of real-time vehicle data flows 112, and grouped into a plurality of vehicle data shards 300 with the plurality of real-time vehicle data flows 112.

It should be understood that the particular order in which the operations in each of Figures 2, 5, 7 and 8 have been described are merely exemplary and are not intended to indicate that the described order is the only order in which the operations could be performed. One of ordinary skill in the art would recognize various ways to plan a storage space in a warehouse as described herein. Additionally, it should be noted that details described with respect to one of processes 200, 500, 700 and 800 are also applicable in an analogous manner to any other ones of the methods 200, 500, 700 and 800. For brevity, the analogous details are not repeated.

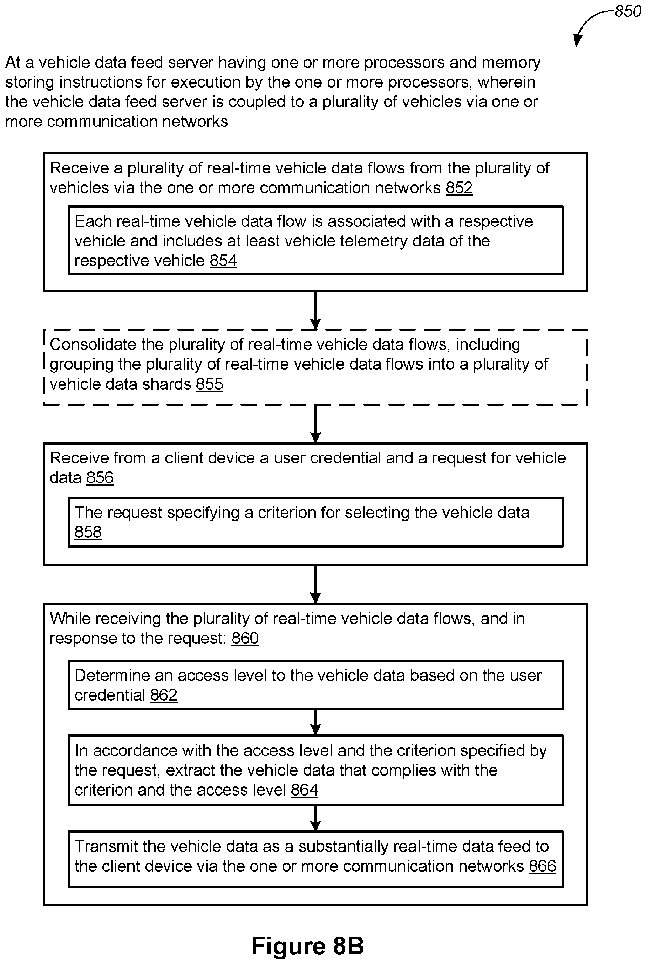

Figure 8B is a flow diagram of a method 850 of communicating vehicle data via a vehicle data feed server 110 in accordance with some embodiments. Method 850 is, optionally, governed by instructions that are stored in a non-transitory computer readable storage medium and that are executed by one or more processors of the computer system (e.g., a server system 104). Each of the operations shown in Figure 8B may correspond to instructions stored in the computer memory or computer readable storage medium (e.g., memory 906 of a server system 104 in Figure 9) of the server system 104. The computer readable storage medium may include a magnetic or optical disk storage device, solid state storage devices such as Flash memory, or other non-volatile memory device or devices. The computer readable instructions stored on the computer readable storage medium may include one or more of: source code, assembly language code, object code, or other instruction format that is interpreted by one or more processors. Some operations in method 850 may be combined and/or the order of some operations may be changed.

The vehicle data feed server 110 is coupled to a plurality of vehicles 102 via one or more communication networks 108, and receives (852) a plurality of real-time vehicle data flows 112 from the plurality of vehicles 102 via the one or more communication networks 108. Each real-time vehicle data flow is associated (854) with a respective vehicle and includes at least vehicle telemetry data of the respective vehicle. Optionally, each real-time vehicle data flow 112 further includes one or more of control event data, control command, vehicle-to-device binding event data, sensor readings, and log data associated with the respective vehicle 102. In some embodiments, each real-time vehicle data flow 112 is associated with a respective unique flow identifier. Each of the plurality of vehicles 102 has a unique vehicle identifier, and each real-time vehicle data flow is associated with a respective vehicle 102 by the unique vehicle identifier of the respective vehicle 102.

In some embodiments, the plurality of real-time vehicle data flows 112 is consolidated (855) and grouping into a plurality of vehicle data shards 300. Each data flow 112 may be grouped into a respective vehicle data shard 300 based on a respective flow identification or vehicle identification. A hash function is applied to identify the respectively vehicle data shard 300 based on the respective flow or vehicle identification. Once a data flow 112 is assigned to a vehicle data shard 300, all of its data items are stored in the vehicle data shard 300. All data items related to the vehicle corresponding to the data flow 112 are therefore consolidated within the same vehicle data shard 300.

In some situations, each of the plurality of real-time vehicle data flows 112 is supplemented with a supplemental data item, and the supplemental data item and the respective real-time vehicle data flow 112 are grouped in a respective vehicle data shard 300. In some embodiments, when the plurality of real-time vehicle data flows 112 is grouped into the plurality of vehicle data shards 300, each data item of the plurality of real-time vehicle data flows is converted into a respective data item of the plurality of vehicle data shards according to a common format. In some embodiments, the plurality of vehicle data shards 300 includes a predefined number of vehicle data shards (e.g., 24 shards), and each of the plurality of real-time vehicle data flows 112 is entirely grouped in a respective one of the vehicle data shards 300. The plurality of vehicle data shards 300 are stored in a vehicle database of the vehicle data feed server 110 according to a pre-defined data storage rule (e.g., stored for seven days). In some embodiments, for each vehicle data shard 300, a subset of the real-time vehicle data flows 112 is grouped into the respective vehicle data shard 300 sequentially according to a temporal order.

The vehicle data feed server 110 receives (856) from a client device 106 a user credential and a request 114 for vehicle data, and the request specifies (858) a criterion for selecting the vehicle data, e.g., from the plurality of real-time vehicle data flows 112 or from the plurality of vehicle data shards consolidated from the data flows 112. In some embodiments, the client device 106 is configured to execute a vehicle data application via a user account thereof. The user account corresponds to the user credential, and the user credential includes a user name and a password of the user account. In some embodiments, the criterion for selecting the vehicle data is defined based on one or more of a VIN number, a vehicle type, a plurality of predefined sensor data types, and a plurality of corresponding sensing thresholds.

While receiving (860) the plurality of real-time vehicle data flows, and in response to the request 114, the vehicle data feed server 110 determines (862) an access level to the vehicle data based on the user credential, extracts (864) the vehicle data that complies with the criterion and the access level, and transmits (866) the vehicle data as a substantially real-time data feed to the client device via the one or more communication networks. The vehicle data 116 may be presented to the user via a vehicle data application executed on the client device 106. In some embodiments, a data item in the vehicle data 116 is supplemented with a supplemental data item, and the supplemental data item is transmitted to the client device 106 in conjunction with the respective data item in the vehicle data 116. In some embodiments, the client device 106 is configured to generate a vehicle control command 118 based on the vehicle data 116 and send the vehicle control command 118 to one of the plurality of vehicles 102, such that the one of the plurality of vehicles 102 can be controlled based on the vehicle data that is collected in real time from at least a subset of vehicles 102 and complies with the criterion for selecting the vehicle data 116.

In some embodiments, the request 114 received from the client device 106 includes a present request. In response to the present request, the vehicle data feed server 110 identifies a reference pointer 404 in the plurality of vehicle data shards 300 corresponding to a temporal location. The real-time vehicle data flows 112 collected prior to the temporal location is processed in response to a previous request that is received from the client device 106 and specifies the criterion for selecting vehicle data. The previous request is received prior to the present request. The real-time vehicle data flows 112 collected subsequently to the temporal location is processed in response to the present request.

In some embodiments, the request 114 received from the client device 106 includes a first request, and the requested vehicle data 116 is extracted from a first vehicle data shard 300 in response to the first request. The vehicle data feed server 110 receives from a second client device a second user credential and a second request for second vehicle data. The second request specifies a second criterion for selecting the second vehicle data. In response to the second request, independently of the first request, the vehicle data feed server 110 determines a second access level to the second vehicle data based on the second user credential, extracts from a second vehicle data shard the second vehicle data that complies with the second criterion and the second access level, and transmits the second vehicle data as a second substantially real-time data feed to the second client device via the one or more communication networks. The second vehicle data is extracted from the second vehicle data shard, independently of the first vehicle data being extracted from the first vehicle data shard. In some embodiments, the first vehicle data and second vehicle data are distinct, and optionally extracted from the same vehicle data shard or two distinct vehicle shards. Alternatively, in some embodiments, the first vehicle data and second vehicle data may be identical and extracted from the same vehicle shard even though the first and second requests are distinct and different from each other.

In some embodiments, the plurality of real-time vehicle data flows 112 are stored in a vehicle database of the vehicle data feed server 110 for a first period of time. Configuration metadata is generated and corresponds to the plurality of real-time vehicle data flows and the request received from the client device. The configuration metadata is stored in the vehicle database for a second period of time that is greater than the first period of time. Stated another way, the configuration metadata is stored for a longer period of time, and the plurality of real-time vehicle data flows 112 is purged from the vehicle database prior to the configuration metadata.

Further, in some embodiments, the vehicle data feed server 110 is communicatively coupled to one or more vehicle operator devices 124 via the one or more communication networks 108, and receives one or more control data flows 128 from the one or more vehicle operator devices 124 or the vehicles 102. Each control data flow includes one or more control commands, and each command is issued by a respective vehicle operator device to control a respective subset of the plurality of vehicles. The one or more control data flows 128 are consolidated with the plurality of real-time vehicle data flows 112, and grouped into a plurality of vehicle data shards 300 with the plurality of real-time vehicle data flows 112.

It should be understood that the particular order in which the operations in each of Figures 2, 5, 7 and 8 have been described are merely exemplary and are not intended to indicate that the described order is the only order in which the operations could be performed. One of ordinary skill in the art would recognize various ways to plan a storage space in a warehouse as described herein. Additionally, it should be noted that details described with respect to one of processes 240, 500, 700 and 850 are also applicable in an analogous manner to any other ones of the methods 240, 500, 700 and 850. For brevity, the analogous details are not repeated.

Figure 9 is an exemplary server system 104 configured to enable vehicle data sharing in accordance with some embodiments. The server system 104, typically, includes one or more processing units (CPUs) 902, one or more network interfaces 904, memory 906, and one or more communication buses 908 for interconnecting these components (sometimes called a chipset). The server system 104 could include one or more input devices 910 that facilitate user input, such as a keyboard, a mouse, a voice-command input unit or microphone, a touch screen display, a touch-sensitive input pad, a gesture capturing camera, or other input buttons or controls. The server system 104 could also include one or more output devices 912 that enable presentation of user interfaces and display content, including one or more speakers and/or one or more visual displays.

Memory 906 includes high-speed random access memory, such as DRAM, SRAM, DDR RAM, or other random access solid state memory devices; and, optionally, includes non-volatile memory, such as one or more magnetic disk storage devices, one or more optical disk storage devices, one or more flash memory devices, or one or more other non-volatile solid state storage devices. Memory 906, optionally, includes one or more storage devices remotely located from one or more processing units 902. Memory 906, or alternatively the non-volatile memory within memory 906, includes a non-transitory computer readable storage medium. In some embodiments, memory 906, or the non-transitory computer readable storage medium of memory 906, stores the following programs, modules, and data structures, or a subset or superset thereof:
- Operating system 916 including procedures for handling various basic system services and for performing hardware dependent tasks;
- Network communication module 918 for connecting the server system 104 to other devices (e.g., a vehicle 102, client device 106, vehicle operator device 124) via one or more network interfaces 904 (wired or wireless) and one or more networks 108, such as the Internet, other wide area networks, local area networks, metropolitan area networks, and so on;
- Vehicle data feed server module 920 for storing information of different credentials and associated access levels of clients and users, collecting real-time vehicle data flows 112, associating vehicle data in the real-time vehicle data flows 112 with the different credentials based on the associated access levels, and distributing the data flows 112 including associated vehicle data to one or more client devices 106 based on a user credential and a vehicle data request, where the vehicle data feed server module 920 is configured to extract one or more taps from the user credential and request and apply the taps to control the real-time vehicle data flows 112 to a substantially real-time data feed 116 that carries the requested vehicle data (i.e., a subset of the collected real-time vehicle data flows 112) to be delivered to a requesting client devices 106, and where more details on an example internal architecture of the vehicle data feed server module 920 are explained above with reference to Figures 6A and 6B;
- Vehicle control server module 930 for receiving control data flows 126 from vehicle operator devices 124 and/or client devices 106 and controlling vehicles 102 using the control commands remotely, where the control server module 930 is configured to run a vehicle control application to control the vehicles 102 via a plurality of operator accounts, e.g., by displaying a user interface on which the control commands are entered and applied to control a respective vehicle 102 directly or indirectly via the vehicle control server 108, by monitoring operation of the vehicles 10 in real time in response to the control commands; and
- Server system data 940 for storing at least data items of real-time vehicle data flows 112, including:
   ∘ Vehicle database 942 for storing the real-time vehicle data flows 112 and supplemental data items in a plurality of vehicle data shards;
   ∘ User account information 944 for storing user credentials and associated access levels of one or more user accounts, account settings of the one or more user accounts, and settings of client devices 106 and applications that are associated with each of the user accounts and managed by the server system 104, where in some embodiments, the user account information 944 include account settings of the user accounts of the vehicle data application associated with the vehicle data feed server module 920 and/or the vehicle control application associated with the vehicle control server module 930; and
   ∘ User account data 946 for storing at least data that are generated by a plurality of client devices 106 associated with each of the user accounts of the vehicle data or control application managed by the server system 104, e.g., a history of vehicle data requests, one or more reference pointers, tap and flow configuration metadata, and the like.

Each of the above identified elements may be stored in one or more of the previously mentioned memory devices, and corresponds to a set of instructions for performing a function described above. The above identified modules or programs (i.e., sets of instructions) need not be implemented as separate software programs, procedures, modules or data structures, and thus various subsets of these modules may be combined or otherwise re-arranged in various embodiments. In some embodiments, memory 906, optionally, stores a subset of the modules and data structures identified above. Furthermore, memory 906, optionally, stores additional modules and data structures not described above.

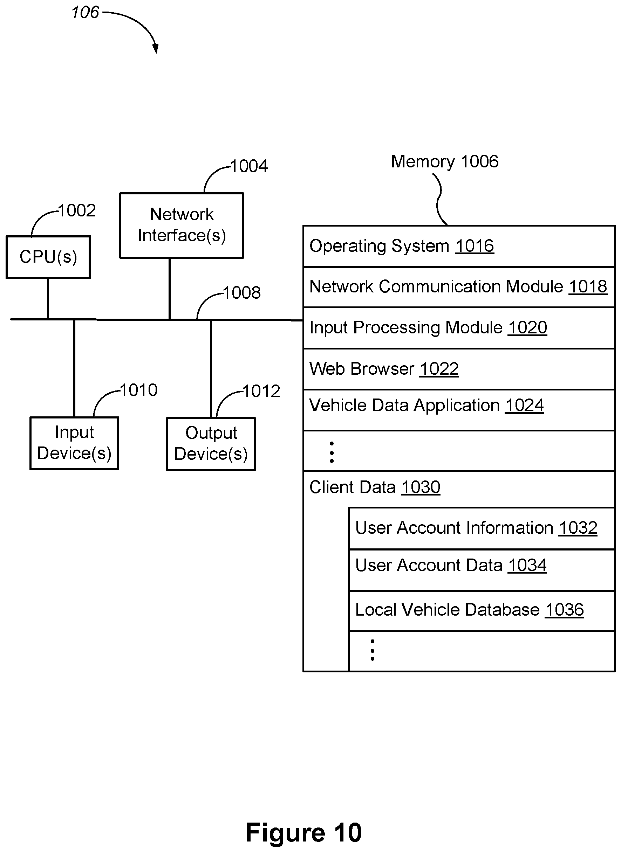

Figure 10 is an exemplary client device 106 configured to execute a vehicle data application that enables requesting and reviewing vehicle data in accordance with some embodiments. The client device 106, typically, includes one or more processing units (CPUs) 1002, one or more network interfaces 1004, memory 1006, and one or more communication buses 1008 for interconnecting these components (sometimes called a chipset). Memory 1006 includes high-speed random access memory, such as DRAM, SRAM, DDR RAM, or other random access solid state memory devices; and, optionally, includes non-volatile memory, such as one or more magnetic disk storage devices, one or more optical disk storage devices, one or more flash memory devices, or one or more other non-volatile solid state storage devices. Memory 1006, optionally, includes one or more storage devices remotely located from one or more processing units 1002. Memory 1006, or alternatively the non-volatile memory within memory 1006, includes a non-transitory computer readable storage medium. The client device 106 could include one or more input devices 1010 that facilitate user input, such as input buttons or controls. Furthermore, the client device 106 could use a microphone and voice recognition or a camera and gesture recognition to supplement or replace the buttons. The client device 106 could also include one or more output devices 1012 that enable presentation of user interfaces and display content, including a speaker and/or a visual display.

In some embodiments, memory 1006, or the non-transitory computer readable storage medium of memory 1006, stores the following programs, modules, and data structures, or a subset or superset thereof:
- Operating system 1016 including procedures for handling various basic system services and for performing hardware dependent tasks;
- Network communication module 1018 for connecting the client device 106 to other computers or systems (e.g., a server system 104, client group server 122, vehicles 102, and vehicle operator devices 124 via one or more network interfaces 1004 (wired or wireless) and one or more networks 108, such as the Internet, other wide area networks, local area networks, metropolitan area networks, cable television systems, satellite television systems, IPTV systems, and so on;
- Input processing module 1020 for detecting one or more user inputs or interactions from one of the one or more input devices 1010 and interpreting the detected input or interaction;
- Web browser 1022 for accessing information on the Internet and presenting a graphic user interface which receives inputs of an access level, a user credential, vehicle data requests and control commands, and presents real-time vehicle data feeds (i.e., vehicle data 116 associated with the user credential including a subset of real-time vehicle data flows 112);

- Vehicle data application 1024 for presenting a user interface which receives inputs defining an access level, a user credential, vehicle data requests and control commands and presents real-time vehicle data feeds (i.e., vehicle data 116 associated with the user credential including a subset of real-time vehicle data flows 112); and
- Device data 1030 for storing at least the vehicle data feeds provided by the server system 104, including:
   ∘ User account information 1032 for storing user credentials and associated access levels of one or more user accounts, account settings of the one or more user accounts, and settings of the client device 106 and applications that are associated with each of the user accounts accessed by the client device 106, where in some embodiments, the user account information 1032 includes account settings of one or more user accounts of the vehicle data application 1024, and the one or more user accounts belong to the same client group;
   ∘ User account data 1034 for storing at least data that are associated with each of the user accounts of the vehicle data application accessed on the client device, e.g., a history of vehicle data requests, one or more reference pointers, tap and flow configuration metadata, and the like; and
   ∘ Local Vehicle database 1036 for storing real-time data feeds 116 (i.e., requested vehicle data) provided by the server system 104 in response to vehicle data requests of the client device 106.

Each of the above identified elements may be stored in one or more of the previously mentioned memory devices, and corresponds to a set of instructions for performing a function described above. The above identified modules or programs (i.e., sets of instructions) need not be implemented as separate software programs, procedures, modules or data structures, and thus various subsets of these modules may be combined or otherwise re-arranged in various embodiments. In some embodiments, memory 1006, optionally, stores a subset of the modules and data structures identified above. Furthermore, memory 1006, optionally, stores additional modules and data structures not described above.

Each of the above identified elements may be stored in one or more of the previously mentioned memory devices, and corresponds to a set of instructions for performing a function described above. The above identified modules or programs (i.e., sets of instructions) need not be implemented as separate software programs, procedures, modules or data structures, and thus various subsets of these modules may be combined or otherwise re-arranged in various embodiments. In some embodiments, memory 1006, optionally, stores a subset of the modules and data structures identified above. Furthermore, memory 1006, optionally, stores additional modules and data structures not described above.

It will also be understood that, although the terms first, second, etc. are, in some instances, used herein to describe various elements, these elements should not be limited by these terms. These terms are only used to distinguish one element from another. For example, a first vehicle data shard can be termed a second vehicle data shard, and, similarly, a second vehicle data shard can be termed a first vehicle data shard, without departing from the scope of the various described embodiments. The first vehicle data shard and the second vehicle data shard are both vehicle data shards, but they optionally refer to the same vehicle data shard or two distinct and different vehicle data shards.

The terminology used in the description of the various described embodiments herein is for the purpose of describing particular embodiments only and is not intended to be limiting. As used in the description of the various described embodiments and the appended claims, the singular forms "a", "an" and "the" are intended to include the plural forms as well, unless the context clearly indicates otherwise. It will also be understood that the term "and/or" as used herein refers to and encompasses any and all possible combinations of one or more of the associated listed items. It will be further understood that the terms "includes," "including," "comprises," and/or "comprising," when used in this specification, specify the presence of stated features, integers, steps, operations, elements, and/or components, but do not preclude the presence or addition of one or more other features, integers, steps, operations, elements, components, and/or groups thereof.

As used herein, the term "if' is, optionally, construed to mean "when" or "upon" or "in response to determining" or "in response to detecting" or "in accordance with a determination that," depending on the context. Similarly, the phrase "if it is determined" or "if [a stated condition or event] is detected" is, optionally, construed to mean "upon determining" or "in response to determining" or "upon detecting [the stated condition or event]" or "in response to detecting [the stated condition or event]" or "in accordance with a determination that [a stated condition or event] is detected," depending on the context.

Although various drawings illustrate a number of logical stages in a particular order, stages that are not order dependent may be reordered and other stages may be combined or broken out. While some reordering or other groupings are specifically mentioned, others will be obvious to those of ordinary skill in the art, so the ordering and groupings presented herein are not an exhaustive list of alternatives. Moreover, it should be recognized that the stages can be implemented in hardware, firmware, software or any combination thereof.

The foregoing description, for purpose of explanation, has been described with reference to specific embodiments. However, the illustrative discussions above are not intended to be exhaustive or to limit the scope of the claims to the precise forms disclosed. Many modifications and variations are possible in view of the above teachings. The embodiments were chosen in order to best explain the principles underlying the claims and their practical applications, to thereby enable others skilled in the art to best use the embodiments with various modifications as are suited to the particular uses contemplated.

Some implementations of this application are directed to communicating vehicle data via a vehicle data feed server that is communicatively coupled to a plurality of vehicles. The vehicle data feed server receives a plurality of real-time vehicle data flows from the vehicles, and each real-time vehicle data flow is associated with a respective vehicle and includes vehicle telemetry data of the respective vehicle. The vehicle data feed server also receives from a client device a user credential and a request for vehicle data, and the request specifies a criterion for selecting the vehicle data. While receiving the real-time vehicle data flows, and in response to the request, the vehicle data feed server determines an access level to the vehicle data based on the user credential, extracts the vehicle data that complies with the criterion and the access level, and transmits the vehicle data as a substantially real-time data feed to the client device.

## Claims

1. A method for communicating vehicle data, comprising:
at a vehicle data feed server (110) having one or more processors and memory storing instructions for execution by the one or more processors, wherein the vehicle data feed server is coupled to a plurality of vehicles (102, 102A) via one or more communication networks (108):
receiving a plurality of credentials and associated access levels to vehicle data;
storing the plurality of credentials with the associated access levels in a database;
receiving a plurality of real-time vehicle data flows (112) from the plurality of vehicles via the one or more communication networks, wherein each real-time vehicle data flow is associated with a respective vehicle and includes at least vehicle telemetry data of the respective vehicle;
receiving from a user of a client device (106) a user credential and a vehicle data request (114, 222); and
in response to the vehicle data request:
determining, based on the user credential, whether the user is authorized to access vehicle data associated with the user credential, where the vehicle data includes a subset of the plurality of real-time vehicle data flows; and
in accordance with a determination that the user is authorized to access the vehicle data associated with the user credential, forwarding the subset of the plurality of real-time vehicle data flows to the client device.

2. The method of claim 1, further comprising:
prior to receiving the vehicle data request, associating the subset of the plurality of the real-time vehicle data flows with the user credential based on the access level associated with the user credential.

3. The method of claim 1 or 2, wherein the vehicle data feed server is communicatively coupled to one or more vehicle operator devices via the one or more communication networks, the method further comprising at least one of:
receiving one or more control data flows from the one or more vehicle operator devices or the vehicles, wherein each control data flow includes one or more control commands, and each command is issued by a respective vehicle operator device to control a respective subset of the plurality of vehicles, wherein the access level associated with the user credential is used for selecting at least part of the vehicle data associated with the user credential from the one or more control data flows; and
consolidating the one or more control data flows with the plurality of real-time vehicle data flows, including grouping the plurality of real-time vehicle data flows and the one or more control data flows into a plurality of vehicle data shards.

4. The method of any of the preceding claims, further comprising:
supplementing a data item in the vehicle data associated with the user credential with a first supplemental data item, wherein the first supplemental data item is forwarded to the client device in conjunction with the respective data item in the vehicle data.

5. The method of any of the preceding claims, further comprising:
supplementing each of the plurality of real-time vehicle data flows with a second supplemental data item; and
grouping the second supplemental data item and the respective real-time vehicle data flow in a respective vehicle data shard,
wherein for each of the subset of the plurality of real-time vehicle data flows, the second supplemental data item is determined according to the access level associated with the user credential, indicating that the respective real-time vehicle data flow is part of the vehicle data associated with the user credential.

6. The method of any of the preceding claims, further comprising:
consolidating the plurality of real-time vehicle data flows, including grouping the plurality of real-time vehicle data flows into a plurality of vehicle data shards, wherein the vehicle data associated with the user credential includes a subset of the plurality of vehicle data shards.

7. The method of claim 6, wherein:
when the plurality of real-time vehicle data flows is grouped into the plurality of vehicle data shards, each data item of the plurality of real-time vehicle data flows is converted into a respective data item of the plurality of vehicle data shards according to a common format.

8. The method of claim 6, wherein for each vehicle data shard, data items in a respective subset of the real-time vehicle data flows are grouped into the respective vehicle data shard sequentially according to a temporal order; and the vehicle data request includes a present request, the method further comprising:
in response to the present request, identifying a reference pointer in the plurality of vehicle data shards corresponding to a temporal location;
wherein the real-time vehicle data flows collected prior to the temporal location is configured to provide the vehicle data associated with the user credential in response to a previous request that is received from the user of the client device; and
wherein the real-time vehicle data flows collected subsequently to the temporal location is configured to provide the vehicle data associated with the user credential in response to the present request.

9. The method of claim 6, wherein the vehicle data request includes a first request, and the vehicle data associated with the user credential includes first vehicle data extracted from a first vehicle data shard in response to the first request, the method further comprising:
receiving from a second user of a second client device a second user credential and a second request; and
in response to the second request, independently of the first request:
determining, based on the second user credential, whether the second user is authorized to access second vehicle data associated with the second user credential, where the second vehicle data includes a second subset of the plurality of real-time vehicle data flows; and
in accordance with a determination that the second user is authorized to access the second vehicle data associated with the second user credential, forwarding the second subset of the plurality of real-time vehicle data flows to the second client device;
wherein the second vehicle data is extracted from a second vehicle data shard, independently of the first vehicle data being extracted from the first vehicle data shard.

10. The method of any of the preceding claims, wherein:
the client device is configured to execute a vehicle data application via a user account thereof;
the user account corresponds to the user credential, the user credential including a user name and a password of the user account; and
the vehicle data is transmitted to the client device and presented to the user via the vehicle data application.

11. The method of any of the preceding claims, wherein:
the client device is configured to generate a vehicle control command based on the vehicle data and send the vehicle control command to one of the plurality of vehicles, such that the one of the plurality of vehicles can be controlled based on the vehicle data that is collected in real time from a subset of the plurality of vehicles and is accessible to the user of the client device.

12. The method of any of the preceding claims, further comprising:
associating each real-time vehicle data flow with a respective unique flow identifier;
wherein each of the plurality of vehicles has a unique vehicle identifier, and each real-time vehicle data flow is associated with a respective vehicle by the unique vehicle identifier of the respective vehicle.

13. The method of any of the preceding claims, further comprising:
storing the plurality of real-time vehicle data flows in the database of the vehicle data feed server for a first period of time;
generating configuration metadata corresponding to the plurality of real-time vehicle data flows and the vehicle data request received from the client device; and
storing the configuration metadata in the database for a second period of time hat is greater than the first period of time.

14. A non-transitory computer-readable medium, having instructions stored thereon, which when executed by one or more processors cause the processors to perform the method of any of claims 1-13.

15. A vehicle data feed server, comprising:
one or more processors; and
memory having instructions stored thereon, which when executed by the one or more processors cause the processors to perform the method of any of claims 1-13.

## Patentansprüche

1. Verfahren zum Übermitteln von Fahrzeugdaten, umfassend:
an einem Fahrzeugdateneinspeisungsserver (110),
der einen oder mehrere Prozessoren aufweist, und einen Speicher, der Anweisungen zur Ausführung durch den einen oder die mehreren Prozessoren speichert, wobei der Fahrzeugdateneinspeisungsserver über ein oder mehrere Kommunikationsnetzwerke (108) mit einer Vielzahl von Fahrzeugen (102, 102A) gekoppelt ist:
Empfangen einer Vielzahl von Anmeldeinformationen und assoziierten Zugriffsebenen auf Fahrzeugdaten,
Speichern der Vielzahl von Anmeldeinformationen mit den assoziierten Zugriffsebenen in einer Datenbank;
Empfangen einer Vielzahl von Echtzeit-Fahrzeugdatenströmen (112) von der Vielzahl von Fahrzeugen über das eine oder die mehreren Kommunikationsnetzwerke, wobei jeder Echtzeit-Fahrzeugdatenstrom mit einem jeweiligen Fahrzeug assoziiert ist und mindestens Fahrzeug-Telemetriedaten des jeweiligen Fahrzeugs beinhaltet;
Empfangen, von einem Benutzer einer Client-Vorrichtung (106),
von Benutzeranmeldeinformationen und einer Fahrzeugdatenanforderung (144, 222); und
als Antwort auf die Fahrzeugdatenanforderung:
Bestimmen, basierend auf den Benutzeranmeldeinformationen, ob der Benutzer berechtigt ist, auf Fahrzeugdaten zuzugreifen, die mit den Benutzeranmeldeinformationen assoziiert sind, wobei die Fahrzeugdaten eine Teilmenge der Vielzahl von Echtzeit-Fahrzeugdatenströmen beinhalten; und
gemäß einer Bestimmung, dass der Benutzer berechtigt ist, auf die Fahrzeugdaten zuzugreifen, die mit den Benutzeranmeldeinformationen assoziiert sind, Weiterleiten der Teilmenge der Vielzahl von Echtzeit-Fahrzeugdatenströmen an die Client-Vorrichtung.

2. Verfahren nach Anspruch 1, ferner umfassend:
vor Empfangen der Fahrzeugdatenanforderung, Assoziieren der Teilmenge der Vielzahl der Echtzeit-Fahrzeugdatenströme mit den Benutzeranmeldeinformationen basierend auf der Zugriffsebene, die mit den Benutzeranmeldeinformationen assoziiert sind.

3. Verfahren nach Anspruch 1 oder 2, wobei der Fahrzeugdateneinspeisungsserver über das eine oder die mehreren Kommunikationsnetze kommunikativ mit einer oder mehreren Fahrzeugbetreibervorrichtungen gekoppelt ist, das Verfahren ferner umfassend mindestens eines von Folgenden:
Empfangen eines oder mehrerer Steuerdatenströme von der einen oder den mehreren Fahrzeugbetreibervorrichtungen oder den Fahrzeugen, wobei jeder Steuerdatenstrom einen oder mehrere Steuerbefehle beinhaltet und jeder Befehl von einer jeweiligen Fahrzeugbetreibervorrichtung ausgegeben wird, um eine jeweilige Teilmenge der Vielzahl von Fahrzeugen zu steuern, wobei die Zugriffsebene, die mit den Benutzeranmeldeinformationen assoziiert ist, zum Auswählen von mindestens einem Teil der Fahrzeugdaten, die mit dem Benutzeranmeldeinformationen assoziiert sind, aus dem einen oder den mehreren Steuerdatenströmen verwendet wird; und
Zusammenführen des einen oder der mehreren Steuerdatenströme mit der Vielzahl von Echtzeit-Fahrzeugdatenströmen, beinhaltend ein Gruppieren der Vielzahl von Echtzeit-Fahrzeugdatenströmen und des einen oder der mehreren Steuerdatenströme in eine Vielzahl von Fahrzeugdaten-Shards.

4. Verfahren nach einem der vorhergehenden Ansprüche, ferner umfassend:
Ergänzen eines Datenelements in den Fahrzeugdaten, das mit dem Benutzeranmeldeinformationen assoziiert ist, mit einem ersten zusätzlichen Datenelement, wobei das erste zusätzliche Datenelement in Verbindung mit dem jeweiligen Datenelement in den Fahrzeugdaten an die Client-Vorrichtung weitergeleitet wird.

5. Verfahren nach einem der vorhergehenden Ansprüche, ferner umfassend:
Ergänzen von jedem der Vielzahl von Echtzeit-Fahrzeugdatenströmen durch ein zweites ergänzendes Datenelement; und
Gruppieren des zweiten zusätzlichen Datenelements und des jeweiligen Echtzeit-Fahrzeugdatenstroms in einem jeweiligen Fahrzeugdaten-Shard,
wobei für jeden der Teilmenge der Vielzahl von Echtzeit-Fahrzeugdatenströmen das zweite ergänzende Datenelement gemäß der mit den Benutzeranmeldeinformationen assoziierten Zugriffsebene bestimmt wird, was angibt, dass der jeweilige Echtzeit-Fahrzeugdatenstrom Teil der mit den Benutzeranmeldeinformationen assoziierten Fahrzeugdaten ist.

6. Verfahren nach einem der vorhergehenden Ansprüche, ferner umfassend:
Konsolidieren der Vielzahl von Echtzeit-Fahrzeugdatenströmen, beinhaltend Gruppieren der Vielzahl von Echtzeit-Fahrzeugdatenströmen in eine Vielzahl von Fahrzeugdaten-Shards, wobei die Fahrzeugdaten, die mit den Benutzeranmeldeinformationen assoziiert sind, eine Teilmenge der Vielzahl von Fahrzeugdaten-Shards beinhalten.

7. Verfahren nach Anspruch 6, wobei:
wenn die Vielzahl von Echtzeit-Fahrzeugdatenströmen in die Vielzahl von Fahrzeugdaten-Shards gruppiert wird, wird jedes Datenelement der Vielzahl von Echtzeit-Fahrzeugdatenströmen in ein entsprechendes Datenelement der Vielzahl von Fahrzeugdaten-Shards gemäß einem gemeinsamen Format umgewandelt.

8. Verfahren nach Anspruch 6, wobei für jeden Fahrzeugdaten-Shard Datenelemente in einer jeweiligen Teilmenge der Echtzeit-Fahrzeugdatenströme sequentiell gemäß einer zeitlichen Reihenfolge in den jeweiligen Fahrzeugdaten-Shard gruppiert werden; und die Fahrzeugdatenanforderung eine vorhandene Anforderung beinhaltet, das Verfahren ferner umfassend:
als Reaktion auf die vorhandene Anforderung, Identifizieren eines Referenzzeigers in der Vielzahl von Fahrzeugdaten-Shards, die einer zeitlichen Stelle entsprechen;
wobei die Echtzeit-Fahrzeugdatenströme, die vor der zeitlichen Stelle gesammelt werden, konfiguriert sind, um die Fahrzeugdaten, die mit den Benutzeranmeldeinformationen assoziiert sind, als Reaktion auf eine vorherige Anforderung, die von dem Benutzer der Client-Vorrichtung empfangen wird, bereitzustellen; und
wobei die Echtzeit-Fahrzeugdatenströme, die im Anschluss an die zeitliche Stelle gesammelt werden, konfiguriert sind, um die Fahrzeugdaten, die mit den Benutzeranmeldeinformationen assoziiert sind, als Reaktion auf die vorhandene Anforderung bereitzustellen.

9. Verfahren nach Anspruch 6, wobei die Fahrzeugdatenanforderung eine erste Anforderung beinhaltet und die Fahrzeugdaten, die mit den Benutzeranmeldeinformationen assoziiert sind, erste Fahrzeugdaten beinhalten, die als Reaktion auf die erste Anforderung aus einem ersten Fahrzeugdaten-Shard extrahiert werden, das Verfahren ferner umfassend:
Empfangen von zweiten Benutzeranmeldeinformationen und einer zweiten Anforderung von einem zweiten Benutzer einer zweiten Client-Vorrichtung; und
als Reaktion auf die zweite Anforderung, unabhängig von der ersten Anforderung:
Bestimmen, basierend auf den zweiten Benutzeranmeldeinformationen, ob der zweite Benutzer berechtigt ist, auf zweite Fahrzeugdaten zuzugreifen, die mit den zweiten Benutzeranmeldeinformationen assoziiert sind, wobei die zweiten Fahrzeugdaten eine zweite Teilmenge der Vielzahl von Echtzeit-Fahrzeugdatenströmen beinhalten; und
gemäß einer Bestimmung, dass der zweite Benutzer berechtigt ist, auf die zweiten Fahrzeugdaten zuzugreifen, die mit den zweiten Benutzeranmeldeinformationen assoziiert sind, Weiterleiten der zweiten Teilmenge der Vielzahl von Echtzeit-Fahrzeugdatenströmen an die zweite Client-Vorrichtung;
wobei die zweiten Fahrzeugdaten aus einem zweiten Fahrzeugdaten-Shard extrahiert werden, unabhängig von den ersten Fahrzeugdaten, die aus dem ersten Fahrzeugdaten-Shard extrahiert werden.

10. Verfahren nach einem der vorhergehenden Ansprüche, wobei:
die Client-Vorrichtung konfiguriert ist, um eine Fahrzeugdatenanwendung über ein Benutzerkonto davon auszuführen;
das Benutzerkonto den Benutzeranmeldeinformationen entspricht, wobei die Benutzeranmeldeinformationen einen Benutzernamen und ein Passwort des Benutzerkontos beinhalten; und
die Fahrzeugdaten an die Client-Vorrichtung übertragen und dem Benutzer über die Fahrzeugdatenanwendung präsentiert werden.

11. Verfahren nach einem der vorhergehenden Ansprüche, wobei:
die Client-Vorrichtung konfiguriert ist, um einen Fahrzeugsteuerungsbefehl basierend auf den Fahrzeugdaten zu erzeugen und den Fahrzeugsteuerungsbefehl an eines der Vielzahl von Fahrzeugen zu senden, sodass das eine der Vielzahl von Fahrzeugen basierend auf den Fahrzeugdaten gesteuert werden kann, die in Echtzeit von einer Teilmenge der Vielzahl von Fahrzeugen gesammelt werden und für den Benutzer der Client-Vorrichtung zugänglich sind.

12. Verfahren nach einem der vorhergehenden Ansprüche, ferner umfassend:
Assoziieren von jedem Echtzeit-Fahrzeugdatenstrom mit einer jeweiligen eindeutigen Stromkennung;
wobei jedes der Vielzahl von Fahrzeugen eine eindeutige Fahrzeugkennung aufweist und jeder Echtzeit-Fahrzeugdatenstrom durch die eindeutige Fahrzeugkennung des jeweiligen Fahrzeugs mit einem jeweiligen Fahrzeug assoziiert ist.

13. Verfahren nach einem der vorhergehenden Ansprüche, ferner umfassend:
Speichern der Vielzahl von Echtzeit-Fahrzeugdatenströmen in der Datenbank des Fahrzeugdateneinspeisungsservers über einen ersten Zeitraum;
Erzeugen von Konfigurationsmetadaten, die der Vielzahl von Echtzeit-Fahrzeugdatenströmen und der von der Client-Vorrichtung empfangenen Fahrzeugdatenanforderung entsprechen; und
Speichern der Konfigurationsmetadaten in der Datenbank über einen zweiten Zeitraum, der größer ist als der erste Zeitraum.

14. Nicht-transitorisches computerlesbares Medium, auf dem Anweisungen gespeichert sind, die, wenn sie von einem oder mehreren Prozessoren ausgeführt werden, die Prozessoren veranlassen, das Verfahren nach einem der Ansprüche 1-13 durchzuführen.

15. Fahrzeugdateneinspeisungsserver, umfassend:
einen oder mehrere Prozessoren; und
Speicher, auf dem Anweisungen gespeichert sind, die, wenn sie von dem einen oder den mehreren Prozessoren ausgeführt werden, die Prozessoren veranlassen, das Verfahren nach einem der Ansprüche 1-13 durchzuführen.

## Revendications

1. Procédé permettant de communiquer des données de véhicule, comprenant :
au niveau d'un serveur de source de données de véhicule (110) comportant un ou plusieurs processeurs et une mémoire
stockant des instructions en vue de leurs exécutions par le ou les processeurs, ledit serveur de source de données de véhicule
étant couplé à une pluralité de véhicules (102, 102A) par l'intermédiaire d'un ou plusieurs réseaux de communication (108) :
la réception d'une pluralité de justificatifs d'identité et de niveaux d'accès associés aux données de véhicule ;
le stockage de la pluralité de justificatifs d'identité avec les niveaux d'accès associés dans une base de données ;
la réception d'une pluralité de flux de données (112) de véhicule en temps réel en provenance de la pluralité de véhicules par l'intermédiaire du ou des réseaux de communication,
chaque flux de données de véhicule en temps réel
étant associé à un véhicule respectif et comprenant au moins des données de télémétrie du véhicule respectif ;
la réception en provenance d'un utilisateur d'un dispositif client (106) d'un justificatif d'identité d'utilisateur et d'une demande de données de véhicule
(144, 222) ; et
en réponse à la demande de données de véhicule :
la détermination, sur la base du justificatif d'identité d'utilisateur, pour savoir si l'utilisateur est autorisé à accéder à des données de véhicule associées au justificatif d'identité d'utilisateur, où les données de véhicule comprennent un sous-ensemble de la pluralité de flux de données de véhicule en temps réel ; et
conformément à une détermination que l'utilisateur est autorisé à accéder aux données de véhicule associées au justificatif d'identité d'utilisateur, le transfert du sous-ensemble de la pluralité de flux de données de véhicule en temps réel au dispositif client.

2. Procédé de la revendication 1, comprenant en outre :
avant de recevoir la demande de données de véhicule, l'association du sous-ensemble de la pluralité de flux de données de véhicule en temps réel au justificatif d'identité d'utilisateur sur la base du niveau d'accès associé au justificatif d'identité d'utilisateur.

3. Procédé de la revendication 1 ou 2, ledit serveur de source de données de véhicule étant couplé de manière communicative à un ou plusieurs dispositifs opérateurs de véhicule par l'intermédiaire du ou des réseaux de communication, le procédé comprenant en outre au moins un parmi :
la réception d'un ou de plusieurs flux de données de commande en provenance du ou des dispositifs opérateurs de véhicule ou des véhicules, chaque flux de données de commande comprenant une ou plusieurs instructions de commande, et chaque instruction étant émise par un dispositif opérateur de véhicule respectif pour commander un sous-ensemble respectif de la pluralité de véhicules, ledit niveau d'accès associé au
justificatif d'identité d'utilisateur étant utilisé pour sélectionner au moins une partie des données de véhicule associées au justificatif d'identité d'utilisateur parmi le ou les flux de données de commande ; et
la consolidation du ou des flux de données de commande avec la pluralité de flux de données de véhicule en temps réel, comprenant le regroupement de la pluralité de flux de données de véhicule en temps réel et le ou les flux de données de commande dans une pluralité de fragments de données de véhicule.

4. Procédé de l'une quelconque des revendications précédentes, comprenant en outre :
l'ajout d'un élément de données dans les données de véhicule associées au justificatif d'identité d'utilisateur avec un premier élément de données supplémentaire, ledit premier élément de données supplémentaire étant transféré au dispositif client en conjonction avec l'élément de données respectif dans les données de véhicule.

5. Procédé de l'une quelconque des revendications précédentes, comprenant en outre :
l'ajout de chacun de la pluralité de flux de données de véhicule en temps réel avec un second élément de données supplémentaire ; et
le regroupement du second élément de données supplémentaire et du flux de données de véhicule en temps réel respectif dans un fragment de données de véhicule respectif,
pour chacun du sous-ensemble de la pluralité de flux de données de véhicule en temps réel, ledit second élément de données supplémentaire étant déterminé selon le niveau d'accès associé au justificatif d'identité d'utilisateur, indiquant que le flux de données de véhicule en temps réel respectif fait partie des données de véhicule associées au justificatif d'identité d'utilisateur.

6. Procédé de l'une quelconque des revendications précédentes, comprenant en outre :
la consolidation de la pluralité de flux de données de véhicule en temps réel, comprenant le regroupement de la pluralité de flux de données de véhicule en temps réel dans une pluralité de fragments de données de véhicule, lesdites données de véhicule associées au justificatif d'identité d'utilisateur comprenant un sous-ensemble de la pluralité de fragments de données de véhicule.

7. Procédé de la revendication 6 :
lorsque la pluralité de flux de données de véhicule en temps réel est regroupée dans la pluralité de fragments de données de véhicule, chaque élément de données de la pluralité de flux de données de véhicule en temps réel étant converti en un élément de données respectif de la pluralité de fragments de données de véhicule selon un format commun.

8. Procédé de la revendication 6, pour chaque fragment de données de véhicule, lesdits éléments de données dans un sous-ensemble respectif des flux de données de véhicule en temps réel étant regroupés dans le fragment de données de véhicule respectif séquentiellement selon un ordre temporel ; et ladite demande de données de véhicule comprenant une demande actuelle, le procédé comprenant en outre :
en réponse à la présente demande, l'identification d'un pointeur de référence dans la pluralité de fragments de données de véhicule correspondant à un emplacement temporel ;
lesdits flux de données de véhicule en temps réel collectés avant l'emplacement temporel étant configurés pour fournir les données de véhicule associées au justificatif d'identité d'utilisateur en réponse à une demande précédente qui est reçue en provenance de l'utilisateur du dispositif client ; et
lesdits flux de données de véhicule en temps réel collectés ultérieurement à l'emplacement temporel étant configurés pour fournir les données de véhicule associées au justificatif d'identité d'utilisateur en réponse à la demande actuelle.

9. Procédé de la revendication 6, ladite demande de données de véhicule comprenant une première demande, et lesdites données de véhicule associées au justificatif d'identité d'utilisateur comprenant des premières données de véhicule extraites d'un premier fragment de données de véhicule en réponse à la première demande, le procédé comprenant en outre :
la réception en provenance d'un second utilisateur d'un second dispositif client d'un second justificatif d'identité d'utilisateur et d'une second demande ; et
en réponse à la seconde demande, indépendamment de la première demande : la détermination, sur la base du second justificatif d'identité d'utilisateur, pour savoir si le second utilisateur est autorisé à accéder aux secondes données de véhicule associées au second justificatif d'identité d'utilisateur, où les secondes données de véhicule comprennent un second sous-ensemble de la pluralité de flux de données de véhicule en temps réel ; et
conformément à une détermination que le second utilisateur est autorisé à accéder aux secondes données de véhicule associées au second justificatif d'identité d'utilisateur, le transfert du second sous-ensemble de la pluralité de flux de données de véhicule en temps réel au second dispositif client ;
lesdites secondes données de véhicule étant extraites d'un second fragment de données de véhicule, indépendamment des premières données de véhicule extraites du premier fragment de données de véhicule.

10. Procédé de l'une quelconque des revendications précédentes :
ledit dispositif client étant configuré pour exécuter une application de données de véhicule par l'intermédiaire d'un compte utilisateur de celui-ci ;
ledit compte utilisateur correspondant au justificatif d'identité d'utilisateur, le justificatif d'identité d'utilisateur comprenant un nom d'utilisateur et un mot de passe du compte utilisateur ; et
lesdites données de véhicule étant transmises au dispositif client et présentées à l'utilisateur par l'intermédiaire de l'application de données de véhicule.

11. Procédé de l'une quelconque des revendications précédentes :
ledit dispositif client étant configuré pour générer une instruction de commande de véhicule sur la base des données de véhicule et envoyer l'instruction de commande de véhicule à l'un de la pluralité de véhicules, de sorte que celui de la pluralité de véhicules puisse être commandé sur la base des données de véhicule qui sont collectées en temps réel à partir d'un sous-ensemble de la pluralité de véhicules et soit accessible à l'utilisateur du dispositif client.

12. Procédé de l'une quelconque des revendications précédentes, comprenant en outre :
l'association de chaque flux de données de véhicule en temps réel à un identifiant de flux unique respectif ;
chacun de la pluralité de véhicules comportant un identifiant de véhicule unique, et chaque flux de données de véhicule en temps réel étant associé à un véhicule respectif par l'identifiant de véhicule unique du véhicule respectif.

13. Procédé de l'une quelconque des revendications précédentes, comprenant en outre :
le stockage de la pluralité de flux de données de véhicule en temps réel dans la base de données du serveur de source de données de véhicule pendant une première période de temps ;
la génération des métadonnées de configuration correspondant à la pluralité de flux de données de véhicule en temps réel et à la demande de données de véhicule reçue en provenance du dispositif client ; et
le stockage des métadonnées de configuration dans la base de données pendant une seconde période de temps qui est supérieure à la première période de temps.

14. Support non transitoire lisible par ordinateur sur lequel sont stockées des instructions qui, lorsqu'elles sont exécutées par un ou plusieurs processeurs, amènent les processeurs à réaliser le procédé de l'une quelconque des revendications 1 à 13.

15. Serveur de source de données de véhicule, comprenant :
un ou plusieurs processeurs ; et
une mémoire sur laquelle sont stockées des instructions qui, lorsqu'elles sont exécutées par le ou les processeurs, amènent les processeurs à réaliser le procédé de l'une quelconque des revendications 1 à 13.
